# EUROPÄISCHE PATENTSCHRIFT

(11) **EP 4 084 999 B1**
(45) Veröffentlichungstag und Bekanntmachung des Hinweises auf die Patenterteilung: **24.09.2025**
(21) Anmeldenummer: 21700671.7
(22) Anmeldetag: 07.01.2021
(51) Int. Cl.: B62D 15/02, G08G 1/14, G01C 21/36, G01C 11/06

(54) **VERFAHREN ZUM STEUERN EINER ANTRIEBSEINHEIT EINES KRAFTWAGENS, PARKASSISTENZSYSTEM FÜR EINEN KRAFTWAGEN UND KRAFTWAGEN MIT EINEM SOLCHEN PARKASSISTENZSYSTEM**
METHOD FOR CONTROLLING A DRIVE UNIT OF A MOTOR VEHICLE, PARKING ASSISTANCE SYSTEM FOR A MOTOR VEHICLE, AND MOTOR VEHICLE HAVING A PARKING ASSISTANCE SYSTEM OF THIS KIND
PROCÉDÉ DE COMMANDE D'UNE UNITÉ D'ENTRAÎNEMENT D'UN VÉHICULE AUTOMOBILE, SYSTÈME D'AIDE AU STATIONNEMENT POUR UN VÉHICULE AUTOMOBILE ET VÉHICULE AUTOMOBILE ÉQUIPÉ D'UN SYSTÈME D'AIDE AU STATIONNEMENT DE CE TYPE

(30) Priorität: 22.01.2020 DE 102020200716
(43) Veröffentlichungstag der Anmeldung: 09.11.2022
(73) Patentinhaber: VOLKSWAGEN AKTIENGESELLSCHAFT, 38440 Wolfsburg (DE)
(72) Erfinder: GÜNZEL, Thorben, 38118 Braunschweig (DE); THOMAS, Michael, 38108 Braunschweig (DE); SCHWITTERS, Frank, 38154 Königslutter (DE)
(86) Internationale Anmeldenummer: PCT/EP2021/050194
(87) Internationale Veröffentlichungsnummer: WO 2021/148253

(56) Entgegenhaltungen:
- DE-A1- 102011 103 743
- DE-A1- 102013 015 348
- DE-A1- 102015 201 317
- US-A1- 2010 100 559
- US-A1- 2016 358 474

## Beschreibung

Die Erfindung betrifft ein Verfahren zum Steuern einer Antriebseinheit eines Kraftwagens, wobei eine Sensorik einen Parkraum des Kraftwagens zumindest teilweise erfasst und entsprechende Sensordaten erzeugt, die einer Steuereinrichtung bereitgestellt werden, mittels derer ein den Parkraum zumindest teilweise räumlich charakterisierender Datensatz erstellt wird, sodass mittels der Steuereinrichtung in Abhängigkeit von dem Datensatz die Antriebseinheit gesteuert wird.

Die Erfindung betrifft ferner ein Parkassistenzsystem für einen Kraftwagen sowie einen Kraftwagen, der mit einem solchen Parkassistenzsystem ausgerüstet ist.

Aus dem Stand der Technik sind Parkassistenzsysteme für Kraftwagen bekannt, die einen Nutzer des Kraftwagens beim Einparken und/oder Ausparken des Kraftwagens in einen Parkraum bzw. Parkplatz (zum Beispiel in Längs- oder Querparkplätze bzw. -lücken) unterstützen, insbesondere dabei eine Längs- und/oder Querführung des Kraftwagens während des Ein- bzw. Ausparkens, das heißt in einem Parkbetrieb des Kraftwagens, autonom oder zumindest teilautonom abnehmen. Das bedeutet, der Kraftwagen ist zumindest teilautonom betreibbar, insbesondere zumindest teilautomatisch antreibbar und/oder lenkbar. Dies trifft bei dem Kraftwagen insbesondere für den Parkbetrieb zu. Elemente bzw. Objekte in der Umgebung des Kraftwagens (zum Beispiel Fahrzeuge, Bordsteine, Wände etc.) werden dabei mittels Umfeldsensoren (zum Beispiel Ultraschallsensoren, Kameras, Laserscanner etc.) detektiert.

Insbesondere Parkassistenzsysteme, die die Längsführung des Kraftwagens (Gas geben und Bremsen) während des Parkbetriebs übernehmen, sind in der Lage, eine Antriebseinheit des Kraftwagens autonom bzw. automatisch zu starten. Die Antriebseinheit umfasst insbesondere eine Verbrennungskraftmaschine.

Heutzutage ist darüber hinaus bekannt, dass der Nutzer des Kraftwagens mittels einer entsprechenden Bedienhandlung den Parkbetrieb des Kraftwagens bzw. des Parkassistenzsystems ferngesteuert aktivieren bzw. starten kann. Hierzu betätigt der Nutzer auf einem vom Kraftwagen entfernten, aber diesem zugeordneten Endgerät ein entsprechendes Bedienelement (beispielsweise Antippen und/oder Halten wenigstens eines Tasters oder wenigstens einer Betätigungsfläche einer grafischen Benutzeroberfläche des Endgeräts). Daraufhin wird also das Parkassistenzsystem aktiviert und die Antriebseinheit durch das Parkassistenzsystem gestartet. Sofern der Nutzer den Parkbetrieb nach dem Start der Antriebseinheit, das heißt während die Antriebseinheit eingeschaltet ist, nicht durch die Bedienhandlung oder durch eine weitere Bedienhandlung (zum Beispiel Antippen und/oder Halten des oder eines weiteren Bedienelements) fortsetzt, kann die Antriebseinheit des Kraftwagens in unerwünschter Weise über einen längeren Zeitraum betrieben werden bzw. weiterlaufen. Insbesondere in Situationen, in welchen ein den Kraftwagen umgebendes Volumen des Parkraums begrenzt ist, besteht der Bedarf, zu vermeiden, dass Personen in dem Parkraum, insbesondere der Nutzer des Kraftwagens und/oder Beifahrer, in dem Zeitraum nicht übermäßig Verbrennungsabgasen der Antriebseinheit bzw. Verbrennungskraftmaschine ausgesetzt werden. Es besteht weiter der Bedarf, Personen, die sich in einem anderen, beispielsweise an den Parkraum angrenzenden, Raum befinden (zum Beispiel Einzelgarage mit dazu benachbartem Wohn- bzw. Schlafraum) ebenfalls vor der übermäßigen Einwirkung der Verbrennungsabgase in dem Zeitraum zu schützen. Denn die Verbrennungsabgase sind, insbesondere bei übermäßiger Einwirkung, gesundheitsschädlich.

Hierzu wird die Antriebseinheit mittels des herkömmlichen Parkassistenzsystems nach einer vorgegebenen Zeitspanne autonom/automatisch abgeschaltet, um eine Vergiftung von Personen auszuschließen. Dabei wird das den Kraftwagen umgebende Volumen nicht berücksichtigt, sondern von einem vorgegebenen Standardvolumen ausgegangen. Dies führt dazu, dass der maximal zulässige Zeitraum zwischen dem Starten der Antriebseinheit und dem Fortsetzen des Parkbetriebs (mittels der wenigstens einen Bedienhandlung) besonders gering ist, unabhängig von einem tatsächlichen Gefährdungspotential durch die Verbrennungsabgase im Volumen des Parkraums. Denn in vielen Situationen ist ein deutlich größeres Volumen vorhanden (zum Beispiel Parkplätze in der freien Umgebung, Tiefgarage, Doppelgarage).

Das automatische/autonome Ausschalten der Antriebseinheit nach diesem besonders kurzen Zeitraum ist für den Nutzer besonders unkomfortabel, da der Parkbetrieb innerhalb dieses Zeitraums nach dem Starten der Antriebseinheit durch das Parkassistenzsystem fortgesetzt werden muss.

Der Nutzer muss somit innerhalb dieses Zeitraums gegebenenfalls den Kraftwagen verlassen, das Endgerät (zum Beispiel Smartphone oder Schlüsselelement etc.) in die Handnehmen, ein gewünschtes Parkszenario auswählen und den Parkbetrieb am Endgerät aktiv fortsetzen, beispielsweise an einem Fahrtaster des Schlüsselelements oder an einer Bedienfläche des Smartphones, wobei das Schlüsselelement bzw. das Smartphone mit dem Kraftwagen gekoppelt sind).

Bei ungeübten Nutzern oder langsamen Nutzern (zum Beispiel neue Nutzer, ältere Personen) kann dabei der Zeitraum für den Nutzer nicht ausreichend sein, sodass die Antriebseinheit ausgeschaltet wird und der Parkbetrieb abgebrochen wird. Anschließend muss das Parkassistenzsystem erneut aktiviert werden. Dies ist entsprechend unkomfortabel für den Fahrer.

Die DE 10 2007 057 216 B4 offenbart ein System für ein Fahrzeug mit einem Antriebsmotor zum Antrieb des Fahrzeugs und einer drahtlosen Fernbedienungseinrichtung, die zumindest zum Anlassen des Antriebsmotors dient, wobei eine Steuereinrichtung vorgesehen ist, die geeignet ist, zumindest ein von der Fernbedienungseinrichtung zum Anlassen des Antriebsmotors erzeugtes Signal zu empfangen und auf der Grundlage des empfangenen Signals das Anlassen des Antriebsmotors zu bewirken, wobei die Steuereinrichtung geeignet ist, bei Empfang des Signals eine einmalige oder wiederholte Ermittlung auf der Grundlage von Signalen, die zumindest von einem Abstandssensor und/oder einem Licht- oder Fotosensor geliefert werden, vorzunehmen, ob sich das Fahrzeug in einem zumindest teilweise geschlossenen Raum befindet, und in Abhängigkeit eines Ermittlungsergebnisses das Anlassen des Antriebsmotors zu verhindern oder den Antriebsmotor nach erfolgtem Anlassen abzuschalten.

Darüber hinaus offenbart die DE 10 2016 209 465 B3 ein Verfahren zur automatischen Steuerung eines Motors eines Fahrzeugs, wobei das Verfahren die folgenden Schritte aufweist: Erfassen eines Befehls zum Starten des Motors des Fahrzeugs; Starten des Motors des Fahrzeugs; im Ansprechen auf den Motorstart Erfassung der Zeit und eines ersten Signals; und Stoppen des Motors, falls die Zeiterfassung einen bestimmten ersten Schwellenwert überschreitet und kein Steuerungsbefehl des Fahrzeugs erfasst wird, wobei bei jedem erneuten erfassten Befehl zum Motorstart des Fahrzeugs das Verfahren von vorne beginnt und die Zeit und ein weiteres Signal erfasst werden, wobei der Motorstart blockiert wird, wenn wenigstens zwei Signale erfasst wurden und die Anzahl der erfassten Signale einen bestimmten zweiten Schwellenwert überschreitet, wobei die Blockierung des Motorstarts aufgehoben wird, falls ein Startbefehl mit einem Zündschlüssel erfasst wird.

Ferner offenbart die DE 10 2012 014 002 A1 ein Verfahren zur Fernkommunikation eines Kraftfahrzeugs mit einer externen Kommunikationseinheit, mittels mindestens einer Luftschnittstelle und mindestens einer Sensorik, wobei über die Luftschnittstelle Daten der Sensorik des Kraftfahrzeugs an die Kommunikationseinheit übertragen werden, wobei mittels der Sensorik ein äußeres Umfeld des Kraftfahrzeugs erfasst wird.

Aus der DE 10 2015 201 317 A1 ist eine Vorrichtung zum Vermessen einer Abmessung zwischen zumindest zwei Punkten auf zumindest einer Oberfläche für ein Fahrzeug bekannt. Das Fahrzeug umfasst zumindest eine Bilderzeugungseinrichtung zum Abtasten der Fahrzeugumgebung, eine Anzeigeeinrichtung zum Darstellen des Abbilds der Fahrzeugumgebung, eine Eingabeeinrichtung zum Festlegen zumindest zweier Punkte als Messpunkte, zwischen denen die Abmessungen zu ermitteln sind, in der dargestellten Abbildung, zumindest einen Umfeldsensor zum Erfassen der Entfernung und der Richtung der Messpunkte bzgl. des Fahrzeugs und eine Auswerteeinrichtung zum Ermitteln der Abmessung anhand der erfassten Entfernungen und Richtungen der Messpunkte sowie zum Ausgeben der ermittelten Abmessung. DE 10 2015 201317 A1 zeigt insbesondere ein Verfahren zum Steuern einer Antriebseinheit eines Kraftwagens, wobei eine Sensorik einen Parkraum des Kraftwagens zumindest teilweise erfasst und entsprechende Sensordaten erzeugt, die einer Steuereinrichtung bereitgestellt werden, mittels derer ein den Parkraum zumindest teilweise räumlich charakterisierender Datensatz erstellt wird, sodass mittels der Steuereinrichtung in Abhängigkeit von dem Datensatz die Antriebseinheit gesteuert wird, wobei mittels der Steuereinrichtung ein Volumenmaß des Parkraums ermittelt und dem Datensatz zum Steuern der Antriebseinheit hinzugefügt wird.

Aufgabe der vorliegenden Erfindung ist es, einen besonders sicheren und besonders nutzerfreundlichen Parkbetrieb eines Kraftwagens zu schaffen.

Diese Aufgabe wird erfindungsgemäß durch ein Verfahren mit den Merkmalen des Patentanspruchs 1, durch ein Parkassistenzsystem mit den Merkmalen des Patentanspruchs 14 sowie durch einen Kraftwagen mit den Merkmalen des Patentanspruchs 15 gelöst. Vorteilhafte Ausgestaltungsformen sind in den Unteransprüchen angegeben.

Vorteile und vorteilhafte Ausgestaltungen des erfindungsgemäßen Verfahrens sind als Vorteile und vorteilhafte Ausgestaltungen des erfindungsgemäßen Parkassistenzsystems und des erfindungsgemäßen Kraftwagens anzusehen und umgekehrt. Vorteile und vorteilhafte Ausgestaltungen des erfindungsgemäßen Parkassistenzsystems sind als Vorteile und vorteilhafte Ausgestaltungen des erfindungsgemäßen Kraftwagens anzusehen und umgekehrt. Um nun den Parkbetrieb des Kraftwagens besonders sicher und besonders nutzerfreundlich auszubilden, ist erfindungsgemäß vorgesehen, dass mittels der Steuereinrichtung ein Volumenmaß des Parkraums ermittelt und dem Datensatz zum Steuern der Antriebseinheit hinzugefügt wird.

Es wird mit weiteren Kraftwagendaten mittels der Steuereinrichtung auf einen Abgasstrom und/oder eine Abgasqualität bzw. -zusammensetzung geschlossen, woraus sich unter Berücksichtigung des ermittelten Volumenmaßes des Parkraums ein noch in zulässiger Weise verfügbarer Restzeitraum zum Fortsetzen eines Parkbetriebs mittels eines Nutzers ergibt, bevor eine Abgaskonzentration in dem Volumenmaß des Parkraums einen Schwellwert überschreitet.

Der Kraftwagen weist die Antriebseinheit auf, die als eine Verbrennungskraftmaschine ausgebildet ist oder eine solche umfasst. Die Verbrennungskraftmaschine stößt in einem befeuerten Betriebszustand durch eine Abgasanlage hindurch Verbrennungsabgase, insbesondere Kohlenstoffdioxide (CO₂), Kohlenstoffmonoxide (CO) und Stockstoffoxide (NOₓ) aus. In einem ausgeschalteten Betriebszustand der Verbrennungskraftmaschine findet in keinem Brennraum der Verbrennungskraftmaschine ein Einström-, Verdichtungs-, Arbeits- und/oder Ausschiebevorgang von Fluid statt.

Der Kraftwagen, der insbesondere als Personenkraftwagen ausgebildet ist, ist zwischen einem Nutzungsbetrieb, zum Beispiel Fahrbetrieb, und einem Nichtnutzungsbetrieb umschaltbar. Soll der Kraftwagen genutzt werden, beispielsweise möchte ein Nutzer des Kraftwagens eine Fahrt mit dem Kraftwagen absolvieren, wird der Kraftwagen aus dem Nichtnutzungsbetrieb in den Nutzungsbetrieb geschaltet. Soll der Kraftwagen nicht genutzt werden, beispielsweise möchte der Nutzer den Kraftwagen parken, wird der Kraftwagen in den Nichtnutzungsbetrieb geschaltet.

Der Parkraum ist ein Raum, der dazu vorgesehen ist, dass der Kraftwagen für die Nichtnutzung desselben dort geparkt wird; ist der Kraftwagen in dem Parkraum wunschgemäß positioniert, wird der Kraftwagen aus dem Nutzungsbetrieb in den Nichtnutzungsbetrieb umgeschaltet. Ist der Kraftwagen in den Parkraum hineingefahren, umgibt der Parkraum den Kraftwagen zumindest teilweise. Demnach ist vorgesehen, dass der Kraftwagen, der in dem Parkraum geparkt ist, in den Nichtnutzungsbetrieb geschaltet ist.

Insbesondere umfasst der Kraftwagen die Sensorik, die wenigstens einen Sensor mit wenigstens einem Sensorbetrieb, beispielsweise Ultraschall, Laser, Lidar, Radar, Kamera etc., umfasst. Die Sensorik weist insbesondere eine Vielzahl von Sensoren auf, wobei die Sensoren hinsichtlich ihres Sensorprinzips unterschiedlich ausgebildet sein können. Bei dem jeweiligen Sensor kann es sich um ohnehin in dem Kraftwagen eingesetzte Sensoren handeln, die dann eine Multifunktionalität aufweisen. So kann zum Beispiel ein Laser-Sensor während eines Fahrbetriebs zum Messen eines Abstands zwischen einem vorausfahrenden Fahrzeug und dem Kraftwagen genutzt werden; für das Verfahren kann derselbe Laser-Sensor zum Erfassen des Parkraums genutzt werden.

Hierzu erfasst die Sensorik den Parkraum zumindest teilweise. Das bedeutet, dass wenigstens einer der Sensoren der Sensorik zumindest ein Element des Parkraums erfasst und das entsprechende Sensorsignal erzeugt. Beispielsweise können mittels des Sensors eine Tiefe und eine Breite des Parkraums erfasst werden und ein entsprechendes Tiefenmaß sowie ein entsprechendes Breitenmaß in Form von mittels der Steuereinrichtung verarbeitbaren oder weiterverarbeitbaren Daten der Steuereinrichtung bereitgestellt werden. Dann handelt es sich bei dem Breitenmaß und bei dem Tiefenmaß um die Sensordaten, anhand derer die Steuereinrichtung den Datensatz erstellt. Durch die Breite / das Breitenmaß und die Tiefe / das Tiefenmaß, woraus die Steuereinrichtung eine Fläche bzw. ein Flächenmaß des Parkraums berechnen kann, ist also der Parkraum zumindest räumlich charakterisiert.

Je nach Charakteristikum oder Charakteristika des Parkraums, zum Beispiel dem Flächenmaß, das heißt anhand des Datensatzes, wird die Antriebseinheit mittels der Steuereinrichtung gesteuert. Anders ausgedrückt wird mittels der Steuereinrichtung die Antriebseinheit abhängig von dem Datensatz gesteuert. Hierzu kann die Steuereinrichtung in Abhängigkeit des Datensatzes beispielsweise ein Steuersignal erzeugen, das der Antriebseinheit bereitgestellt wird, zum Beispiel an die Antriebseinheit kabellos und/oder kabelgebunden gesendet wird. Es ist zum einen insbesondere vorgesehen, dass die Steuereinrichtung abhängig von dem Datensatz die Antriebseinheit ausschaltet, sofern die Antriebseinheit bzw. Verbrennungskraftmaschine angeschaltet ist. Zum anderen ist insbesondere vorgesehen, dass die Steuereinrichtung abhängig von dem Datensatz die Antriebseinheit einschalten kann, sofern die Antriebseinheit bzw. Verbrennungskraftmaschine ausgeschaltet ist.

Ist also für das Verfahren eine Höhe des Kraftwagens bekannt bzw. vorgegeben (zum Beispiel eine Standardhöhe für ein Modell des Kraftwagens) und der Steuereinrichtung bereitgestellt, kann mittels der Steuereinrichtung das Volumen bzw. ein Volumenmaß des Parkraums berechnet werden, wobei dann die bekannte Höhe des Kraftwagens mit der Fläche multipliziert wird. Der Datensatz weist also das Volumenmaß auf, wobei der Parkraum durch den das Volumen bzw. Volumenmaß aufweisenden Datensatz zumindest teilweise räumlich charakterisiert wird/ist.

Dieses Verfahren ist besonders sicher, da hier der Zeitraum zwischen dem Aktivieren bzw. Starten des Parkassistenzsystems bis zum Fortsetzen des Parkbetriebs durch den Nutzer in Abhängigkeit von dem den Kraftwagen umgebenden Volumen bestimmt wird. Steht also ein größeres als das Standardvolumen zur Verfügung, ist es über einen längeren Zeitraum zulässig, die Antriebseinheit laufen zu lassen, ohne dass die Gefahr von Gesundheitsschäden für den Nutzer und/oder weitere Personen aufgrund von den Abgasen der Verbrennungskraftmaschine besteht. Indem der Zeitraum länger ist, hat der Nutzer auch länger Zeit, die entsprechende Bedienhandlung zum Fortsetzen des Parkbetriebs vorzunehmen, weswegen das Verfahren - insbesondere für ungeübte Nutzer - besonders nutzerfreundlich ist.

Wird im Laufe des Verfahrens oder mittels des Verfahrens festgestellt, dass der Kraftwagen im Freien geparkt ist oder geparkt werden soll, kann das Volumenmaß des Parkraums als unbegrenzt bzw. unendlich groß angenommen werden. Unter Parkräumen im Freien werden insbesondere nicht überdachte Parkplätze verstanden. Zudem kann ein Parkraum als im Freien betrachtet werden, wenn der Parkraum in einem Gebäude angeordnet ist, dessen Seitenwände größtenteils offen ausgestaltet sind. Derartige Parkräume sind typischerweise auf oberirdischen Ebenen eines Parkhauses zu finden.

In diesem Fall kann sich der maximal zulässige Zeitraum aus wenigstens einer anderen Gegebenheit ergeben. Bei dieser kann es sich beispielsweise um ein Überschreiten eines Kraftstoffverbrauchs des Kraftwagens im Stand oder einer für diesen Fall vorgegebenen maximalen Zeitspanne handeln. Hierdurch wird vermieden, dass der Motor des Fahrzeugs läuft, ohne dass nach einer ausreichend langen Zeitspanne ein Einpark- oder Ausparkvorgang vom Fahrer gestartet wurde.

Noch genauer lässt sich mittels der Steuereinrichtung das Volumen/Volumenmaß bestimmen, wenn mittels der Steuereinrichtung anhand der Sensordaten wenigstens eine Höhe von in dem Parkraum angeordneten Elementen und/oder Objekten zumindest geschätzt bzw. grob bestimmt wird und ein entsprechendes Höhenmaß dem Datensatz zum Steuern der Antriebseinheit hinzugefügt wird. Denn es kommt vor, dass der Nutzer des Kraftwagens den Parkraum zumindest teilweise als Lagerstelle für Elemente nutzt, zum Beispiel für einen Saisonradsatz des Kraftwagens, Gartengeräte, Werkzeuge und/oder andere Haushaltsobjekte etc., die auf einem waagrechten Bodenelement des Parkraums abgestellt sein können und/oder an einem senkrechten Wandelement des Parkraums befestigt, zum Beispiel aufgehängt, sein können. Diese in dem Parkraum gelagerten Elemente verringern jeweils das Volumen, wonach sich der Zeitraum zum Fortsetzen des Parkbetriebs bestimmt. Diese Elemente werden im Rahmen des Verfahrens mittels der Sensorik erfasst. Wird die jeweilige Höhe der von der Sensorik erfassten Elemente geschätzt bzw. grob bestimmt, wird - insbesondere mittels der Steuereinrichtung - eine Höhenklassifikation in Bezug zu dem jeweiligen Element durchgeführt, etwa "niedrig", "hoch", "unbekannt". Hierbei sagt die Höhenklasse "niedrig" aus, dass das entsprechende Element mittels des Kraftwagens noch schadlos überfahrbar ist (Beispiel: Bordstein). Hingegen sagt die Höhenklasse "hoch" aus, dass das entsprechende Element nicht mehr schadlos mittels des Kraftwagens überfahrbar ist (Beispiel: Warnkegel). In Höhenklasse "unbekannt" werden Elemente eingeordnet, die besonders hoch sind, also insbesondere höher als Elemente der Höhenklasse "hoch". Erfasst die Sensorik das jeweilige Element, ist vorgesehen, dass die Sensorik daraufhin der Steuereinrichtung ein Elementbreitenmaß und/oder ein Elementtiefenmaß bereitstellt. Im Zusammenspiel mit der entsprechenden Höhenklassifikation des jeweiligen Elements ermittelt die Steuereinrichtung dann ein entsprechendes Elementvolumen bzw. - volumenmaß. Dieses Elementvolumen und eventuell weitere Elementvolumenmaße anderer Elemente werden dann mittels der Steuereinrichtung von dem Volumenmaß des Parkraums subtrahiert, sodass ein freies Volumen des Parkraums ermittelt wird.

So wird das Volumen des Parkraums noch zuverlässiger bzw. genauer ermittelt, wodurch der zulässige Zeitraum zwischen dem Starten bzw. Aktivieren des Parkassistenzsystems und dem Fortsetzen des Parkbetriebs noch genauer bestimmt wird.

Noch genauer wird das den Zeitraum bestimmende Volumen bestimmt, wenn - beispielsweise mittels der Sensorik - ein eine jeweilige Höhe des jeweiligen Elements repräsentierendes Höhenmaß erzeugt wird, sodass das jeweilige Elementvolumen noch genauer bestimmt wird. Das bedeutet, dass die Sensorik wenigstens einen Sensor aufweist, der dazu ausgebildet ist, eine Höhe von Elementen zu erfassen. Demnach wird mittels der Steuereinrichtung anhand der Sensordaten das Volumenmaß des Parkraums ermittelt und dem Datensatz zum Steuern der Antriebseinheit hinzugefügt.

Bei den in dem Parkraum angeordneten Elementen kann es sich alternativ oder zusätzlich um ein das Volumen des Parkraums begrenzendes Strukturelement handeln. Das jeweilige Strukturelement kann als ein waagrechtes Deckenelement, als das waagrechte Bodenelement oder als das senkrechte Wandelement ausgebildet sein. Ist der Parkraum beispielsweise eine Einzelgarage, kann es sich bei dem jeweiligen Strukturelement etwa um eine nach innen, das heißt dem geparkten Kraftwagen zugewandte, Wandfläche einer Gebäudestruktur handeln, in welcher der Parkraum ausgebildet oder angeordnet ist. Wenigstens eines von vier senkrechten Wandelementen ist als ein Tür- oder Torelement ausgebildet, welches den Parkraum in einem geschlossenen Zustand gegen eine Umgebung desselben abschließt und in einem geöffneten Zustand den Parkraum zu der Umgebung desselben hin öffnet. Alternativ kann der Parkraum lediglich drei senkrechte Wandelemente, also eine offene Seite, aufweisen. Es ist hierbei von besonderem Vorteil, wenn eine jeweilige Höhe des Wandelements bzw. der Wandelemente mittels der Sensorik erfasst wird und ein entsprechendes Höhenmaß dem Datensatz zum Steuern der Antriebseinheit hinzugefügt wird.

Denn so wird das Volumen des Parkraums noch genauer bestimmt, da nicht länger zur Volumenbestimmung die Standardhöhe des Kraftwagens heranzuziehen ist, sondern stattdessen eine tatsächliche Höhe des Parkraums im Zusammenspiel mit dessen Fläche das Volumen ergibt. Ist also zum Beispiel das Deckenelement von einer Oberseite des Kraftwagens entfernt, ergibt sich ein größeres Volumen des Parkraums, das größer ist als das Standardvolumen. So ist der Zeitraum zum Fortsetzen des Parkbetriebs, während die Antriebseinheit bzw. Verbrennungskraftmaschine des Kraftwagens in Betrieb ist, in zulässiger Weise länger aufgrund des Erfassens des tatsächlichen Volumens des Parkraums.

Der den Parkraum zumindest teilweise räumlich charakterisierende Datensatz kann in einer Speichereinrichtung für wenigstens einen weiteren Steuervorgang, bei welchem die Steuereinrichtung die Antriebseinheit steuert, zumindest vorübergehend gespeichert werden. Die Speichereinrichtung kann eine kraftwagenseitige Speichereinheit und/oder eine kraftwagenexterne Speichereinheit (zum Beispiel die einer Cloudservereinrichtung) aufweisen.

Entsprechend wird mittels der Speichereinrichtung der Datensatz - wenn dieser erstmalig erzeugt und abgespeichert wurde - dem Parkassistenzsystem bereitgestellt. Dies ist insbesondere für Nutzer vorteilhaft, die ein und denselben Parkraum, beispielsweise einen persönlich zugewiesenen Parkplatz, wiederholt, zum Beispiel täglich, nutzen. Dann entfällt in vorteilhafter Weise ein jeweiliges Erzeugen des Datensatzes zumindest für ein weiteres Einfahren in den entsprechenden Parkraum. Stattdessen ruft das Parkassistenzsystem von der Speichereinrichtung den Datensatz ab oder sendet die Speichereinrichtung dem Parkassistenzsystem den Datensatz, sodass mittels der Steuereinrichtung die Antriebseinheit anhand des gespeicherten Datensatzes gesteuert oder angesteuert wird. Auf diese Weise ist das Verfahren besonders effizient, da das Parkassistenzsystem besonders energieeffizient betrieben wird und infolgedessen der mit dem Parkassistenzsystem ausgerüstete Kraftwagen besonders kraftstoffeffizient und emissionsarm betrieben werden kann.

Als besonders vorteilhaft hat es sich herausgestellt, wenn mittels der Speichereinrichtung eine Vielzahl von Datensätzen abgespeichert wird, wobei der jeweilige Datensatz genau einem aus einer Vielzahl von Parkräumen zugeordnet ist. Teilt der Nutzer - beispielsweise mittels einer Tasteneingabe - dem Parkassistenzsystem mit, an welchem Parkraum er den Kraftwagen einzuparken beabsichtigt, wird der entsprechend genau diesen Parkraum zugeordnete Datensatz zur Steuerung der Antriebseinheit herangezogen.

Um noch zuverlässiger zu bestimmen, ob das tatsächliche Volumen des Parkraums größer als das vorgegebene Standardvolumen ist, ist bei weiterer Ausgestaltung des Verfahrens vorgesehen, dass bei einem Einfahren des Kraftwagens in den Parkraum die Sensorik den Parkraum zumindest teilweise erfasst und die erzeugten entsprechenden Sensordaten zumindest bis zu einem weiteren Einfahren gespeichert werden. Es kann beispielsweise vorgesehen sein, dass der Parkraum erstmalig genutzt wird, das heißt es ist für das Verfahren nicht erforderlich, dass der Kraftwagen bereits in dem Parkraum steht. So kann bereits bei einem Aussteigen des Nutzers aus dem erstmalig in dem Parkraum stehenden Kraftwagen der entsprechende Parkraum schon zumindest teilweise räumlich charakterisiert sein, um zu bestimmen, ob zum Betrieb des Parkassistenzsystem das vorgegebene Standardvolumen in den Datensatz einfließt oder das tatsächlich größere, das bei dem Erfassen des Parkraums ermittelt wird.

So ist das Verfahren besonders sicher, da es selbst in einer für den Nutzer ungewohnten Umgebung zuverlässig funktioniert und sich der Nutzer vorrangig auf die ihm neue Umgebung konzentrieren kann, anstatt sich beeilen zu müssen, den Parkbetrieb fortzusetzen, um zu vermeiden, dass mittels des Parkassistenzsystems die Antriebseinheit des Kraftwagens deaktiviert wird.

Diese Ausgestaltung ist darüber hinaus dann besonders vorteilhaft, wenn die Sensorik des Kraftwagens nur wenige Sensoren aufweist, beispielsweise lediglich an einer Front oder lediglich an einem Heck des Kraftwagens. So kann insbesondere vorgesehen sein, dass bei dem erstmaligen Einfahren des Kraftwagens in den Parkraum dieser - wie bis hierhin beschrieben - zumindest teilweise räumlich charakterisiert wird. Es erfolgt dann bei einem erneuten Anfahren bzw. Einfahren in den Parkraum erneut das zumindest teilweise Erfassen des Parkraums, sodass dann der Parkraum weiter charakterisiert wird. Beispielsweise kann dasselbe Element und/oder dasselbe Strukturelement mittels der Sensorik aus einem anderen Winkel erfasst werden als bei dem vorangegangenen Einfahren, wodurch zum Beispiel die Höhe des Parkraums noch genauer bestimmt wird. Hierbei kann beispielsweise mittels einer Bedienhandlung des Nutzers dem Parkassistenzsystem eine Information bereitgestellt werden, dass derselbe Parkraum wie beim vorangegangenen Einfahren angefahren wird und beabsichtigt ist, den Kraftwagen in diesem Parkraum abzustellen.

Das bedeutet im Zusammenhang mit dem Volumen, dass es bei dem Verfahren des Parkassistenzsystems bei jedem wiederholten Einfahren in denselben Parkraum immer genauer bestimmt wird.

Alternativ oder zusätzlich zum teilweisen Erfassen des Parkraums beim Einfahren in den Parkraum kann vorgesehen sein, dass bei einem Ausfahren des Kraftwagens aus dem Parkraum die Sensorik den Parkraum zumindest teilweise erfasst und die erzeugten entsprechenden Sensordaten zumindest bis zu einem erneuten Ausfahren gespeichert werden. Wird das Parkassistenzsystem zum Beispiel erstmals bei einem Wegfahren des Kraftwagens aus dem Parkraum aktiviert, beispielsweise aufgrund einer Nutzerabfrage, kann bereits bei dem Ausfahren aus dem Parkraum dieser mittels der Sensorik zumindest teilweise erfasst werden. Kehrt der Kraftwagen zu dem Parkraum zurück, der bereits zumindest teilweise erfasst und entsprechend zumindest teilweise räumlich charakterisiert wurde und aktiviert der Nutzer das Parkassistenzsystem, ist bereits bestimmt, dass der Zeitraum zum Fortsetzen des Parkbetriebs anhand des gegenüber dem vorgegebenen Standardvolumen größeren tatsächlichen Volumens bestimmt wird, sodass der Nutzer dann beim Verlassen des Kraftwagens in vorteilhafter Weise mehr Zeit hat, den Parkbetrieb fortzusetzen.

Diese Ausgestaltung ist darüber hinaus besonders dann vorteilhaft, wenn die Sensorik des Kraftwagens nur die wenigen Sensoren aufweist. So kann insbesondere vorgesehen sein, dass bei einem erstmaligen Ausfahren des Kraftwagens aus dem Parkraum dieser zumindest teilweise räumlich charakterisiert wird. Es erfolgt dann bei einem erneuten Ausfahren bzw. Wegfahren aus dem Parkraum erneut das zumindest teilweise Erfassen des Parkraums, sodass dann der Parkraum weiter charakterisiert wird. Insbesondere kann dasselbe Element und/oder dasselbe Strukturelement mittels der Sensorik aus einem anderen Winkel erfasst werden als bei dem vorangegangenen Ausfahren, wodurch beispielsweise die Höhe des Parkraums noch genauer bestimmt wird.

Ferner ist es denkbar, dass das Volumen des Parkraums immer genauer bestimmt wird, indem sowohl die bei dem Ausfahren erzeugten Sensordaten als auch die bei dem Einfahren erzeugten Sensordaten zur für denselben Parkraum herangezogen werden. Beim erneuten Ein-und Ausfahren wird dabei in vorteilhafter Weise eine Bestätigung der gespeicherten Daten anhand der aktuellen Sensordaten durchgeführt, um Änderungen des Parkraums zu den gespeicherten Daten berücksichtigen zu können. Denn beispielsweise könnte in der Zeit, in der der Kraftwagen nicht in dem Parkraum ist, ein Element und/oder Objekt in den Parkraum gebracht und dort abgestellt worden sein.

Im Zusammenhang mit der Speicherung des Datensatzes für den wenigstens einen weiteren Steuervorgang kann insbesondere vorgesehen sein, dass - etwa mittels der Sensorik - bei dem weiteren Einfahren in den Parkraum und/oder bei dem weiteren Ausfahren aus dem Parkraum zunächst erfasst wird, ob sich wenigstens eine Gegebenheit in dem Parkraum bzw. des Parkraums zwischen dem Einfahren und dem weiteren Einfahren oder zwischen dem Ausfahren und dem weiteren Ausfahren oder zwischen dem Ausfahren und dem Einfahren oder zwischen dem Einfahren und dem Ausfahren geändert hat. Ist dies nicht der Fall, kann auf den mittels der Speichereinrichtung gespeicherten Datensatz, insbesondere das entsprechend in dem Datensatz hinterlegte Volumen, zurückgegriffen werden, um den maximal zulässigen Zeitraum zwischen dem Starten der Antriebseinheit und dem Fortsetzen des Parkbetriebs festzusetzen.

Hat sich hingegen wenigstens eine Gegebenheit in dem Parkraum bzw. des Parkraums geändert, ist beispielsweise ein weiteres Objekt bzw. Element in dem Parkraum abgestellt worden oder ist ein Objekt bzw. Element aus dem Parkraum entfernt worden, wird dies dann durch die Sensorik erfasst. Aufgrund dessen wird dann der Parkraum - wie vorstehend schon beschrieben ist - erfasst, um den maximal zulässigen Zeitraum zwischen dem Starten der Antriebseinheit und dem Fortsetzen des Parkbetriebs festzusetzen.

In weiterer Ausgestaltung des Verfahrens können der Steuereinrichtung mittels eines Navigationssystems, insbesondere Satellitennavigationssystems, des Kraftwagens Positionsdaten bereitgestellt werden, die mittels der Steuereinrichtung dem Datensatz zum Steuern der Antriebseinheit hinzugefügt werden. Bei dem Navigationssystem kann es sich um ein ohnehin in dem Kraftwagen angeordnetes Navigationssystem handeln. Alternativ oder zusätzlich kann das Parkassistenzsystem ein von dem ohnehin in dem Kraftwagen angeordneten Navigationssystem unterschiedliches, separates Navigationssystem umfassen. So kann beispielsweise anhand einer aktuellen Position des Kraftwagens bestimmt werden, ob der Kraftwagen im Freien geparkt ist. Ferner kann anhand Routendaten bestimmt werden, ob der Kraftwagen im Freien geparkt werden soll. Darüber hinaus kann anhand der Routendaten bestimmt werden, ob der Kraftwagen gerade eine Route abfährt, die voraussichtlich an dem Parkraum endet, der bereits zuvor schon genutzt wurde. Des Weiteren ist eine Plausibilitätsprüfung ermöglicht, beispielsweise wenn anhand der Sensorik ermittelt wird, dass der Kraftwagen im Parkraum im Freien stehe, während das Satellitennavigationssystem des Kraftwagens keine Satellitensignale empfängt, was darauf hindeutet, dass der Kraftwagen nicht im Freien steht. Dann kann zum Beispiel mittels der Steuereinrichtung entschieden werden, ob den Sensorsignalen oder den Positionsdaten der Vorzug gegeben wird, um den Zeitraum zum Fortsetzen des Parkbetriebs zu bestimmen. Entsprechend ist das Verfahren hierdurch noch sicherer, da bei einer Fehlfunktion der Sensorik eine Gefahr eines zu groß angenommenen Volumens des Parkraums verhindert wird.

Weiter ist das Verfahren zum Steuern der Antriebseinheit des Kraftwagens noch sicherer und noch zuverlässiger, wenn der Steuereinrichtung mittels einer Servereinrichtung Zusatzdaten bereitgestellt werden, die charakterisieren, ob der Parkraum im Freien ist oder nicht, wobei dann die Zusatzdaten mittels der Steuereinrichtung dem Datensatz zum Steuern der Antriebseinheit hinzugefügt werden. Ein Parkraum kann als im Freien betrachtet werden, wenn der Parkraum in einem Gebäude angeordnet ist, dessen Seitenwände größtenteils offen ausgestaltet sind. Derartige Parkräume sind typischerweise auf oberirdischen Ebenen eines Parkhauses zu finden. Unter Parkräumen im Freien werden zudem nicht überdachte Parkplätze verstanden. In anderen Worten sind Parkräume im Freien insbesondere nicht überdachte Parkplätze oder Parkraum in einem Gebäude angeordnet ist, dessen Seitenwände größtenteils offen ausgestaltet sind.

Um also festzustellen, ob der Parkraum im Freien ist oder nicht, kann vorgesehen sein, dass Backenddaten, etwa Kartendaten, Satellitenbilder, Schwarmdaten etc. der Servereinrichtung bereitgestellt, zum Beispiel zugesendet werden. Die Daten können der Servereinrichtung dabei von mehreren Fahrzeugen (Schwarmdaten) oder anderen Informationsquellen (zum Beispiel von Kartenanbietern) bereitgestellt werden. Die Servereinrichtung kann beispielsweise als die oder eine weitere Cloudservereinrichtung ausgebildet sein, wobei mittels der Cloudservereinrichtung (die auch als Backend bezeichnet werden kann) die Backenddaten vorgehalten werden. Idealerweise weisen die Backenddaten eine vorgegebene Mindestaktualität auf, sind zum Beispiel nicht älter als ein Tag. Hierbei können die Backenddaten insbesondere aus einer Fahrzeug-zu-Fahrzeug- und/oder einer Fahrzeug-zu-Infrastruktur-Datenkommunikation hervorgehen.

Die Zusatzdaten umfassen also eine Information darüber, ob der Kraftwagen im Freien geparkt ist oder werden soll. Mittels der Servereinrichtung wird basierend auf den Backenddaten im Zusammenspiel mit einer aktuellen Position des Kraftwagens ermittelt, ob der Kraftwagen im Freien geparkt ist oder geparkt werden soll, das heißt, ob der Parkraum im Freien ist oder nicht. Basierend auf einem Ergebnis dieser Ermittlung werden demnach die Zusatzdaten erstellt. Hierbei wird die aktuelle Position des Kraftwagens an die Servereinrichtung bzw. weitere Cloudservereinrichtung übermittelt. Dies kann insbesondere ein an das Backend gerichtetes Auslöseereignis darstellen, aufgrund dessen mittels der Servereinrichtung bzw. Backends anhand der Backenddaten und der aktuellen Position des Kraftwagens ermittelt wird, ob dieser im Freien ist. Ferner kann das Auslöseereignis als das Aktivieren des Parkassistenzsystems ausgebildet sein. Das Backend stellt dann die Zusatzdaten der Steuereinrichtung bereit. Die Ermittlung, ob sich das Kraftwagen an der aktuellen Position des Kraftwagens im Freien befindet, erfolgt vorteilhafterweise basierend auf den Backenddaten in der Servereinrichtung bzw. weiterer Cloudservereinrichtung.

Alternativ oder zusätzlich kann vorgesehen sein, dass mittels des Backends die Backenddaten dem Parkassistenzsystem bereitgestellt werden und dieses, insbesondere mittels der im Kraftwagen angeordneten Steuereinrichtung, ermittelt, ob der Kraftwagen im Freien geparkt ist oder geparkt werden soll. Die aktuelle Position des Kraftwagens kann dann beispielsweise durch das Navigationssystem bereitgestellt werden.

So ist der Parkraum noch genauer charakterisierbar, wodurch der maximal zulässige Zeitraum zwischen dem Starten des Parkassistenzsystems und dem Fortsetzen des Parkbetriebs noch genauer bestimmt werden kann.

Es hat sich des Weiteren als vorteilhaft gezeigt, wenn der Steuereinrichtung mittels einer Zeitmesseinrichtung Betriebsdauerdaten bereitgestellt werden, die eine einem jeweiligen Betriebszustand der Antriebseinheit zugeordnete Betriebsdauer der Antriebseinheit charakterisieren, und die Betriebsdauerdaten mittels der Steuereinrichtung dem Datensatz zum Steuern der Antriebseinheit hinzugefügt werden. Das bedeutet, erste Betriebsdauerdaten sind dem befeuerten Betriebszustand der Verbrennungskraftmaschine zugeordnet und zweite Betriebsdauerdaten sind dem ausgeschalteten Betriebszustand der Verbrennungskraftmaschine zugeordnet. Mit anderen Worten erfasst die Zeitmesseinrichtung eine erste Zeitdauer, während derer die Verbrennungskraftmaschine im befeuerten Betriebszustand ist und/oder eine zweite Zeitdauer, während derer die Verbrennungskraftmaschine im ausgeschalteten Betriebszustand ist. Die Zeitmesseinrichtung stellt die jeweiligen Zeitdauern in Form der Betriebsdauerdaten der Steuereinrichtung bereit, welche anhand des dann die Betriebsdauerdaten umfassenden Datensatzes die Antriebseinheit, insbesondere die Verbrennungskraftmaschine, steuert.

Im Zusammenhang mit weiteren Kraftwagendaten (Motortyp, Hubraum, aktueller Verbrauch, Kraftstoffart, Motortemperatur, Temperatur in einem Ansaugsystem, Außentemperatur etc.) wird - insbesondere mittels der Steuereinrichtung - auf einen Abgasstrom (Abgasmenge pro Zeit) und/oder eine Abgasqualität bzw. -zusammensetzung geschlossen, woraus sich unter Berücksichtigung des ermittelten Volumens des Parkraums ein noch in zulässiger Weise verfügbarer Restzeitraum zum Fortsetzen des Parkbetriebs mittels des Nutzers ergibt, bevor eine Abgaskonzentration in dem Volumen des Parkraums einen Schwellwert überschreitet. Insbesondere ist dieser Schwellwert so gewählt, dass der Nutzer, beispielsweise aufgrund einer erneuten Bedienhandlung, ein Erfassen der ersten Zeitdauer wenigstens einmal zurücksetzen bzw. neustarten kann, ohne eine gesundheitsschädliche Abgaskonzentration in dem Parkraum zu riskieren.

Ein Erfassen der zweiten Zeitdauer dient insbesondere dazu festzustellen, wie lange die Verbrennungskraftmaschine bzw. Antriebseinheit ausgeschaltet war, bevor die Antriebseinheit durch das Parkassistenzsystem erneut gestartet wird. Denn es kann aus einem vorangegangenen befeuerten Betriebszustand noch Verbrennungsabgas in der Luft bzw. in dem Volumen des Parkraums vorhanden sein, sodass der maximal in zulässiger Weise noch verfügbare Zeitraum zum Fortsetzen des Parkbetriebs mittels des Nutzers geringer ist als wenn lediglich das (tatsächliche) Volumen des Parkraums berücksichtigt worden wäre.

Da mittels der Steuereinrichtung also sowohl das Volumen bzw. Volumenmaß des Parkraums bestimmt wird als auch der Steuereinrichtung zumindest die erste Zeitdauer bereitgestellt wird, kann mittels der Steuereinrichtung der Zeitraum besonders genau bestimmt werden.

Die Erfindung betrifft des Weiteren ein Parkassistenzsystem für einen Kraftwagen zum Steuern einer Antriebseinheit des Kraftwagens, mit einer Sensorik, mittels derer ein Parkraum des Kraftwagens zumindest teilweise erfassbar und entsprechende Sensordaten erzeugbar sind. Des Weiteren weist das Parkassistenzsystem eine Steuereinrichtung auf, der die entsprechenden Sensordaten bereitstellbar sind, wobei mittels der Sensoreinrichtung ein den Parkraum zumindest teilweise räumlich charakterisierender Datensatz erstellbar ist. Dementsprechend ist mittels der Steuereinrichtung in Abhängigkeit von dem Datensatz die Antriebseinheit steuerbar. Um nun den Parkbetrieb des Kraftwagens besonders vorteilhaft auszubilden, ist erfindungsgemäß bei dem Parkassistenzsystem vorgesehen, dass mittels der Steuereinrichtung anhand der Sensordaten ein Volumenmaß des Parkraums ermittelbar und dem Datensatz zum Steuern der Antriebseinheit hinzufügbar ist.

Das bedeutet, dass die Steuereinrichtung des Parkassistenzsystems zum Durchführen eines Verfahrens zum Steuern der Antriebseinheit des Kraftwagens ausgebildet ist oder einer vorteilhaften Ausgestaltungsform hiervon. Dieses Verfahren ist vorstehend beschrieben.

Schließlich betrifft die Erfindung einen Kraftwagen, der mit einem Parkassistenzsystem, insbesondere dem zuvor beschriebenen Parkassistenzsystem, ausgerüstet ist.

Zu der Erfindung gehören auch Weiterbildungen des erfindungsgemäßen Parkassistenzsystems und des erfindungsgemäßen Kraftwagens, die jeweils Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Parkassistenzsystems bzw. des erfindungsgemäßen Kraftwagens hier nicht noch einmal beschrieben.

Die Erfindung umfasst auch die Kombinationen der Merkmale der beschriebenen Ausführungsformen.

Im Folgenden ist ein Ausführungsbeispiel der Erfindung beschrieben. Hierzu zeigt:
- Fig. 1: eine schematische Ansicht eines in einem Parkraum abgestellten Kraftwagens mit einem Parkassistenzsystem;
- Fig. 2: eine Verfahrensschema in Form eines Flussdiagramms zur Verdeutlichung eines Verfahrens zum Steuern einer Antriebseinheit des Kraftwagens, wobei Elemente aus einem vorangegangenen Einparkvorgang nicht berücksichtigt werden; und
- Fig. 3: eine Verfahrensschema in Form eines Flussdiagramms zur Verdeutlichung des Verfahrens zum Steuern einer Antriebseinheit des Kraftwagens, wobei Elemente aus dem vorangegangenen Einparkvorgang berücksichtigt werden.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

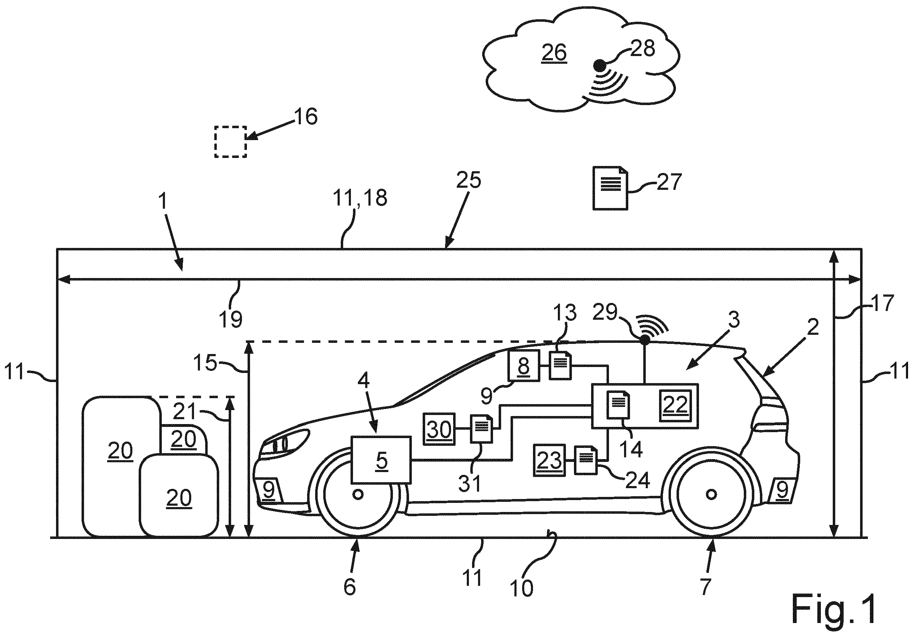

Fig. 1 zeigt in einer schematischen Ansicht einen in einem Parkraum 1 abgestellten Kraftwagen 2 mit einem Parkassistenzsystem 3. Der Kraftwagen 2, der insbesondere als ein Personenkraftwagen ausgebildet ist, weist eine Antriebseinheit 4 auf, die ihrerseits wenigstens eine Verbrennungskraftmaschine 5 aufweist. Mittels der Verbrennungskraftmaschine 5 ist der Kraftwagen 2 entlang und entgegen einer Vorwärtsfahrtrichtung des Kraftwagens 2 antreibbar. Des Weiteren weist die Antriebseinheit 4 eine Lenkanlage und eine Bremsanlage auf, sodass mittels der Antriebseinheit 4 der Kraftwagen 2 längsführbar und querführbar ist. Eine entsprechende Längsantriebskraft und/oder eine entsprechende Querführungskraft, die jeweils durch die Antriebseinheit 4 des Kraftwagens 2 erzeugt werden, wirken sich im vorliegenden Beispiel an einer ersten Achse 6 des Kraftwagens 2 aus. Alternativ oder zusätzlich kann vorgesehen sein, dass sich die Verbrennungskraftmaschine 5, die Lenkanlage und/oder die Bremsanlage der Antriebseinheit 4 an einer zweiten Achse 7 des Kraftwagens 2 auswirken.

Die Antriebseinheit 4 ist insbesondere zumindest teilautomatisch oder vollautomatisch ausgebildet, sodass mittels der Antriebseinheit 4 der Kraftwagen 2 zumindest teilautomatisch antreibbar bzw. betreibbar ist. Demnach ist der Kraftwagen 2 im vorliegenden Beispiel, zumindest in einem Parkbetrieb desselben, teilautonom fahrfähig. Hierunter ist zu verstehen, dass während eines teilautonomen bzw. autonomen Fahrbetriebs des Kraftwagens 2 die Antriebseinheit 4 die Längsführung und/oder Querführung zumindest teilweise einem menschlichen Fahrer des Kraftwagens 2 abnimmt.

Das Parkassistenzsystem 3 weist des Weiteren eine Sensorik 8 auf, die wenigstens einen Sensor 9 oder eine Vielzahl von Sensoren 9 aufweist. Bei dem jeweiligen Sensor 9 handelt es sich insbesondere um ohnehin in dem Kraftwagen 2 eingesetzte Sensoren 9. Das bedeutet, dass der jeweilige Sensor 9 Teil eines weiteren Assistenzsystems des Kraftwagens 2 sein kann, wodurch der jeweilige Sensor 9 dann eine Multifunktionalität aufweist. Beispielsweise kann wenigstens einer der Sensoren 9 der Sensorik 8 Teil eines Abstandsmesssystems des Kraftwagens 2 sein.

Bei dem Parkraum 1 handelt es sich insbesondere um einen Parkplatz, auf oder in dem der Kraftwagen 2 bestimmungsgemäß geparkt werden kann. Das bedeutet, dass der Parkraum 1 bzw. Parkplatz eine Bodenfläche 10 aufweist oder ist, deren Breite, Tiefe und lichte Höhe so bemessen sind, dass mittels des Kraftwagens 2 bestimmungsgemäß in den Parkraum 1 eingefahren und hiernach wieder herausgefahren werden kann, ohne hierbei Strukturelemente 11 des Parkraums 1 und/oder des Kraftwagens 2 zu beschädigen. Der Parkraum 1 bzw. Parkplatz grenzt zum Beispiel an eine Fahrbahn des fließenden Verkehrs an. Zur Abgrenzung des Parkplatzes bzw. Parkraums 1 von der Fahrbahn des fließenden Verkehrs und/oder von wenigstens einem weiteren, insbesondere direkt benachbarten Parkplatz kann eine Abgrenzungsvorrichtung zum Einsatz kommen. Diese Abgrenzvorrichtung kann eine Markierung auf einer Fahrbahnoberfläche zwischen dem Parkraum und der Fahrbahn des fließenden Verkehrs und/oder zwischen dem Parkraum und dem direkt benachbarten Parkraum aufweisen, eine Beschilderung, einen (insbesondere abgesenkten) Bordstein, einen anderen Bodenbelag der Bodenfläche des Parkraums etc.

Der Parkraum 1 oder Parkplatz kann Teil einer Parkanlage sein, die etwa als ein (insbesondere mehrere Parkebenen umfassendes) Parkhaus ausgebildet sein kann. Das Parkhaus umfasst mehrere Parkräume 1 bzw. Parkplätze, die voneinander abgegrenzt sind, sodass jeder der Parkplätze dazu ausgebildet ist, den Kraftwagen aufzunehmen, sobald dieser bestimmungsgemäß in den Parkraum eingefahren ist.

Bei der Parkanlage kann es sich des Weiteren um eine Parkzone im Freien handeln, zum Beispiel um eine in wenigstens einem Straßenzug ausgebildete Parkzone in urbanem Gebiet. Diese Parkzone umfasst dann eine Vielzahl von Parkräumen bzw. Parkplätzen, auf/in denen ein Halten und/oder Parken für bestimmte Verkehrsteilnehmer erlaubt oder verboten sein kann.

Ferner kann der Parkraum 1 in einem Innenraum einer Garage ausgebildet sein. Bei der Garage kann es sich insbesondere um eine Einzelgarage handeln, wobei der Parkraum dann direkt angrenzend an die Bodenfläche 10 des Parkraums 1 die Strukturelemente 11 aufweist, die die Einzelgarage definieren, indem der Parkraum 1 mittels der Strukturelemente 11 (insbesondere allseitig) eingefasst ist. Wenigstens eines von vier senkrechten Strukturelementen 11 ist dann als ein Tür- oder Torelement ausgebildet, das den Parkraum 1 in einem geschlossenen Zustand gegen eine Umgebung des Parkraums 1 abschließt und in einem geöffneten Zustand den Parkraum 1 hin zu der Umgebung öffnet, sodass mittels des Kraftwagens 2 bestimmungsgemäß in den oder aus dem Parkraum 1 hineingefahren oder herausgefahren werden kann.

Der jeweilige Parkraum bzw. Parkplatz kann quer, schräg oder senkrecht zu einer Fahrtrichtung des Verkehrs auf der Fahrbahn ausgebildet sein. Mit anderen Worten kann mittels des Kraftwagens 2, der von der Fahrbahn in den entsprechenden Parkraum 1 einfährt, quer, schräg oder senkrecht zur Fahrtrichtung (rückwärts oder vorwärts) in den Parkplatz bzw. Parkraum 1 hineingefahren werden.

Das Parkassistenzsystem 3 umfasst des Weiteren eine Steuereinrichtung 12, mittels derer die Antriebseinheit 4 steuerbar oder ansteuerbar ist. Bei einem Verfahren zum Steuern der Antriebseinheit 4 des Kraftwagens 2, das mittels des Parkassistenzsystems 3 durchgeführt wird, erfasst die Sensorik 8 bzw. erfassen die Sensoren 9 den Parkraum 1 des Kraftwagens 2 zumindest teilweise. Aufgrund dieses Erfassens erzeugt die Sensorik 8 Sensordaten 13, die die Sensorik 8 dann kabellos und/oder kabelgebunden der Steuereinrichtung 12 bereitstellt. Beispielsweise kann vorgesehen sein, dass die Sensorik 8 die Sensordaten 13 der Steuereinrichtung 12 zusendet. Alternativ oder zusätzlich kann vorgesehen sein, dass die Steuereinrichtung 12 die Sensordaten 13 von der Sensorik 8 abruft. Mittels der Steuereinrichtung 12, insbesondere mittels einer Computereinrichtung der Steuereinrichtung 12, wird hiernach ein Datensatz 14 erstellt, der den Parkraum 1 zumindest teilweise räumlich charakterisiert. Das bedeutet, dass der Datensatz 14 zum Beispiel Daten über die Breite und/oder Tiefe des Parkraums 1 bzw. Parkplatzes umfassen kann. Des Weiteren sind der Steuereinrichtung 12 Daten über eine Höhe 15 des Kraftwagens 2 bereitgestellt, sodass mittels der Steuereinrichtung 12 ein Volumenmaß des Parkraums 1 ermittelt und dem Datensatz 14 hinzugefügt wird.

Die Steuereinrichtung 12 ist dazu ausgebildet, die Antriebseinheit 4 zumindest teilweise zu steuern bzw. anzusteuern. Das bedeutet, dass bei dem Verfahren mittels der Steuereinrichtung 12 die Antriebseinheit 4 in Abhängigkeit von dem Datensatz 14 gesteuert wird. Beispielsweise wird mittels der Steuereinrichtung 12 ein Steuersignal erzeugt, das der Antriebseinheit 4, insbesondere der Verbrennungskraftmaschine 5, bereitgestellt bzw. zugesendet wird. Umfasst also der Datensatz 14 das Volumenmaß des Parkraums 1, bedeutet das, dass abhängig von dem Volumenmaß des Parkraums 1, in welchem der Kraftwagen 2 abgestellt bzw. geparkt ist, die Steuereinrichtung 12 die Antriebseinheit 4 bzw. Verbrennungskraftmaschine 5 steuert.

Da die Verbrennungskraftmaschine 5 in einem befeuerten Betriebszustand Verbrennungsabgase ausstößt, wird eine Luft des Volumens bzw. eine Luft in dem Volumen des Parkraums 1 während des befeuerten Betriebszustands immer weiter belastet, bis - sofern die Verbrennungskraftmaschine 5 nicht zwischenzeitlich ausgeschaltet wird - die Luft so stark mit den Verbrennungsabgasen belastet ist, dass eine Person in dem Parkraum 1 gefahrläuft, zu erkranken und/oder sich zu verletzten. Ein Zeitraum, während dessen die Verbrennungskraftmaschine 5 in dem befeuerten Betriebszustand betrieben werden kann, bevor eine Verbrennungsabgaskonzentration in dem Parkraum 1 zu hoch wird, hängt maßgeblich von dem Volumen des Parkraums 1 ab.

Der Kraftwagen 2 weist im vorliegenden Beispiel ein mobiles Endgerät 16 auf, mittels dessen eine Fahrgastzelle und/oder ein Fahrbetrieb des Kraftwagens 2 entsperrbar bzw. versperrbar sind/ist. Beispielsweise kann es sich bei dem mobilen Endgerät 16 um ein Schlüsselelement, beispielsweise einen Zündschlüssel, des Kraftwagens 2 handeln. Alternativ oder zusätzlich kann es sich bei dem Endgerät 16 um eine mobile Computereinrichtung handeln, die drahtlos mit einer Elektronikeinheit des Kraftwagens 2 gekoppelt ist bzw. koppelbar ist. Die mobile Computereinheit und somit das Endgerät 16 kann beispielsweise als ein Smartphone ausgebildet sein, das ein Computerprogramm ("App") aufweist, mittels dessen der Fahrbetrieb und/oder die Fahrgastzelle des Kraftwagens 2 entsperrbar und versperrbar sind.

Wie bereits eingangs beschrieben, ist bei dem Verfahren zum Steuern der Antriebseinheit 4 des Kraftwagens 2 vorgesehen, dass ein Nutzer des Kraftwagens 2 den Kraftwagen 2 in den Parkbetrieb schalten kann. Insbesondere kann der Nutzer des Kraftwagens 2 diesen mittels des Endgeräts 16 in den Parkbetrieb schalten bzw. umschalten. Hierzu betätigt der Nutzer an dem Endgerät 16 ein Bedienelement, beispielsweise einen Taster oder eine entsprechende Bedienfläche einer grafischen Benutzeroberfläche des Computerprogramms bzw. der App. Da das mobile Endgerät 16 drahtlos mit der Elektronikeinheit des Kraftwagens 2 und infolgedessen drahtlos mit dem Parkassistenzsystem 3 des Kraftwagens 2 verbunden ist, bedeutet das Umstellen bzw. Umschalten des Kraftwagens 2 in den Parkbetrieb, dass das Parkassistenzsystem 3 aktiviert wird, sodass die Steuereinrichtung 12 die Antriebseinheit 4, insbesondere die Verbrennungskraftmaschine 5, aktiviert, das heißt in den befeuerten Betriebszustand schaltet, sofern die Verbrennungskraftmaschine 5 zuvor in einem ausgeschalteten Betriebszustand war. Das bedeutet, dass der Nutzer mittels des Endgeräts 16 den Parkbetrieb des Kraftwagens 2 selbst dann starten bzw. aktivieren kann, wenn die Verbrennungskraftmaschine 5 des Kraftwagens 2 bereits im befeuerten Betriebszustand ist.

Hierbei ist der Nutzer des Kraftwagens 2 bereits aus der Fahrgastzelle des Kraftwagens 2 ausgestiegen und befindet sich demnach in dem Parkraum 1, wobei er von dem Volumen des Parkraums 1 umgeben ist und demnach die Luft in dem Parkraum 1 bzw. in dem Volumen des Parkraums 1 atmet. Um nun zu vermeiden, dass, nachdem der Parkbetrieb des Kraftwagens 2 gestartet wurde, die Verbrennungskraftmaschine 5 also im befeuerten Betriebszustand läuft, die Verbrennungsabgaskonzentration in dem Parkraum 1 zu hoch wird, wird mittels der Steuereinrichtung 12 auf Basis des Datensatzes, das heißt abhängig von dem Volumen des Parkraums 1, nach einer gewissen Zeitdauer bzw. nach einem gewissen Zeitraum die Antriebseinheit 4 angesteuert, sodass die Verbrennungskraftmaschine 5 aus dem befeuerten Betriebszustand in den ausgeschalteten Betriebszustand umgeschaltet wird. Denn im ausgeschalteten Betriebszustand stößt die Verbrennungskraftmaschine 5 keine neuen Verbrennungsabgase in das Volumen / in die Luft des Volumens des Parkraums 1 aus.

Bei der zuvor beschriebenen Höhe 15 des Kraftwagens 2 handelt es sich insbesondere um eine Standardhöhe des entsprechenden Kraftwagenmodells des Kraftwagens 2. Um nun noch genauer das Volumen des Parkraums 1 zu bestimmen, wird mittels der Sensorik 8 bzw. mittels der Sensoren 9 wenigstens eine Höhe 17 wenigstens eines Strukturelements 11 des Parkraums 1 erfasst, entsprechende Sensordaten 13 erzeugt und diese der Steuereinrichtung 12 bereitgestellt. Bei der Höhe 17 kann es sich beispielsweise um eine lichte Höhe zwischen dem die Bodenfläche 10 umfassenden Strukturelement 11 und einem als Deckenelement 18 ausgebildeten Strukturelement 11 handeln. Alternativ oder zusätzlich kann eine Breite des Parkraums 1 erfasst werden, das heißt eine Breite zweier parallel zueinander angeordneter und einander gegenüberliegender Strukturelemente 11, die jeweils beispielsweise als ein Wandelement ausgebildet sind. Insbesondere wenn der Kraftwagen 2 bereits in dem Parkraum 1 geparkt ist, kann des Weiteren eine Tiefe 19 des Parkraums 1 mittels der Sensorik 8 erfasst werden und der entsprechende Datensatz 14 dann der Steuereinrichtung 12 bereitgestellt werden, sodass dann das Volumen des Parkraums 1 besonders genau bestimmbar ist.

Des Weiteren kann es vorkommen, dass in dem Parkraum 1 Elemente 20 angeordnet sind, die ein durch die Strukturelemente 11 definiertes Volumen des Parkraums 1 reduzieren. Es ist dann bei dem Verfahren vorgesehen, dass mittels der Sensorik 8 die Elemente 20 erfasst und hinsichtlich einer entsprechenden Elementhöhe 21 charakterisiert werden. Ferner ist vorgesehen, dass mittels der Sensorik 8 die Elemente 20 erfasst und hinsichtlich ihrer Elementbreite charakterisiert werden, sodass zumindest ein Elementvolumen des jeweiligen Elements 20 mittels der Steuereinrichtung 12 schätzbar / grob bestimmbar ist. Zumindest schätzbar oder grob bestimmbar bedeutet in diesem Zusammenhang, dass eine Elementtiefe des jeweiligen Elements 20 der Sensorik 8 bzw. den Sensoren 9 verborgen bleiben kann. Das jeweilige Elementvolumen ist dennoch schätzbar bzw. grob bestimmbar, wenn die Steuereinrichtung 12 über Daten der Tiefe 19 des Parkraums 1 verfügt.

Der Kraftwagen 2 weist im vorliegenden Beispiel des Weiteren eine Speichereinrichtung 22 auf, die insbesondere Teil der Steuereinrichtung 12 sein kann. Anders ausgedrückt kann vorgesehen sein, dass die Steuereinrichtung 12 die Speichereinrichtung 22 umfasst. Mittels der Speichereinrichtung 22 wird der Datensatz 14 für wenigstens eine weitere erneute Verwendung desselben gespeichert. Das bedeutet, dass dann die Steuereinrichtung 12 die Antriebseinheit 4 anhand des Datensatzes 14 steuert, der mittels der Speichereinrichtung 22 gespeichert ist. Beispielsweise kann vorgesehen sein, dass das Volumen des Parkraums 1 anhand des Verfahrens ein erstes Mal bestimmt wurde und entsprechende Daten in dem Datensatz 14 eingetragen wurden, wonach dann der Datensatz 14 mittels der Speichereinrichtung 22 gespeichert wird. Wird nun mittels des Kraftwagens 2 aus dem Parkraum 1 hinausgefahren und eventuell eine Fahrt mittels des Kraftwagens 2 absolviert, kann die Antriebseinheit 4 bei einem Zurückkehren des Kraftwagens 2 in denselben Parkraum 1 mittels der Steuereinrichtung 12 anhand des gespeicherten Datensatzes 14 angesteuert bzw. gesteuert werden.

Die Speichereinrichtung 22, die einen Datenspeicher umfasst und/oder aus dem Datenspeicher gebildet ist, wird bei dem Verfahren des Weiteren dazu eingesetzt, den Parkraum 1 bei einem wiederholten Einfahren bzw. Einparken des Kraftwagens 2 weiter, das heißt genauer, zu charakterisieren. Denn für das Verfahren ist es nicht zwingend erforderlich, dass der Kraftwagen 2 bereits in dem Parkraum 1 angeordnet bzw. geparkt ist, sondern das Erfassen des Parkraums 1 kann bereits geschehen, wenn der Kraftwagen 2 in den Parkraum 1 hineinfährt. Mit anderen Worten kann vorgesehen sein, dass der Parkraum 1 mittels der Sensorik 8 unter einem Einfahren des Kraftwagens 2 in den Parkraum 1 erfasst wird. Insbesondere wenn der Kraftwagen 2 mit nur wenigen Sensoren 9 ausgerüstet ist, kann dann vorgesehen sein, dass erste erzeugte entsprechende Sensordaten 13 bei einem erstmaligen Einfahren des Kraftwagens 2 in den Parkraum 1 der Steuereinrichtung 12 bereitgestellt werden. Diese ersten Sensordaten werden dann in der Speichereinrichtung 22 abgespeichert. Bei einem weiteren Einfahren, das heißt bei einem anderen Einparkvorgang des Kraftwagens 2 in den Parkraum 1, werden dann mittels der Sensorik 8 bzw. mittels der Sensoren 9 weitere erzeugte entsprechende Sensordaten der Steuereinrichtung 12 bereitgestellt und in der Speichereinrichtung 22 abgespeichert. Es kann dann beispielsweise vorgesehen sein, dass die Steuereinrichtung 12 den Datensatz 14 erstellt, indem sowohl die ersten Sensordaten 13 als auch die weiteren Sensordaten 13 von der Speichereinrichtung 22 abgerufen werden und in den Datensatz 14 einfließen. Beispielsweise können die ersten Sensordaten und die weiteren Sensordaten miteinander den Datensatz 14 bilden.

Alternativ oder zusätzlich kann vorgesehen sein, dass mittels der Sensorik 8 der Parkraum 1 bei einem Ausfahren des Kraftwagens 2 aus dem Parkraum 1 erfasst wird bzw. teilweise erfasst wird. Hierdurch ist dann das Volumen des Parkraums 1 noch genauer bestimmbar.

Im vorliegenden Beispiel weist der Kraftwagen 2 ein Navigationssystem 23, insbesondere Satellitennavigationssystem, auf. Das Navigationssystem 23 stellt der Steuereinrichtung 12 Positionsdaten 24 bereit, die die Steuereinrichtung 12 dem Datensatz 14 zum Steuern der Antriebseinheit 4 bzw. der Verbrennungskraftmaschine 5 hinzufügt. Anhand der Positionsdaten 24 kann beispielsweise festgestellt werden, ob der Kraftwagen 2 sich innerhalb einer Gebäudestruktur 25 befindet oder im Freien abgestellt oder geparkt ist. Denn ist der Kraftwagen 2 im Freien geparkt, das heißt, ist der Parkraum 1 im Freien und somit nicht allseitig durch die Strukturelemente 11 umfasst, ist das Volumen besonders groß, sodass der Zeitraum, während dessen die Antriebseinheit 4 für den Parkbetrieb des Kraftwagens 2 betrieben werden kann, besonders lang. Denn die Verbrennungsabgase der Verbrennungskraftmaschine 5 können aus dem Parkraum 1 hinaus abströmen, sodass keine oder nur eine besonders geringe Gefahr besteht, dass eine Verbrennungsabgaskonzentration in dem Parkraum 1 eine für den Nutzer des Kraftwagens 2 gefährliche Konzentration annimmt.

Ferner ist eine Servereinrichtung, insbesondere Cloudservereinrichtung 26, vorgesehen, die der Steuereinrichtung 12 Zusatzdaten 27 bereitstellt, sodass die Steuereinrichtung 12 diese Zusatzdaten 27 dem Datensatz 14 zum Steuern der Antriebseinheit 4 hinzufügt. Bei den Zusatzdaten 27 kann es sich beispielsweise um Kartendaten, Satellitenbilder, Schwarmdaten etc. handeln. Diese Zusatzdaten 27 werden mittels der Cloudservereinrichtung 26 (die auch als Backend bezeichnet werden kann) vorgehalten und, insbesondere bedarfsgerecht, der Steuereinrichtung 12 bereitgestellt. Hierzu weist die Cloudservereinrichtung 26 ein erstes Datentransferelement 28 auf, das mit einem kraftwagenseitigen Datentransferelement 29 korrespondiert. Da die Cloudservereinrichtung 26 und der Kraftwagen 2 räumlich voneinander getrennt sind, sind die Datentransferelemente 28, 29 jeweils dazu ausgebildet, die Zusatzdaten 27 kabellos zu senden bzw. zu empfangen. Indem die Zusatzdaten 27, insbesondere mittels der Cloudservereinrichtung 26, idealerweise besonders aktuell gehalten werden, beispielsweise nicht älter als ein Tag sind, ist so besonders zuverlässig feststellbar, ob der Kraftwagen 2 in einem allseitig, beispielsweise durch die Strukturelemente 11, umschlossenen Parkraum 1 geparkt ist oder geparkt werden soll.

Insbesondere mittels der Positionsdaten 24 und/oder der Zusatzdaten 27 kann festgestellt werden, ob der Kraftwagen 2 sich auf einer Fahrt in Richtung hin zu einem Parkraum 1 befindet, der bereits charakterisiert und/oder erfasst ist, das bedeutet, ob beabsichtigt ist, den Kraftwagen 2 in einem Parkraum 1 abzustellen, wobei der den entsprechenden Parkraum 1 charakterisierende Datensatz 14 bereits in der Speichereinrichtung 22 abgespeichert ist. In diesem Zusammenhang ist des Weiteren vorgesehen, dass mittels des Parkassistenzsystems 3 eine Vielzahl von Parkräumen 1 erfasst wird und ein entsprechender, dem jeweiligen Parkraum 1 zugeordneter Datensatz 14 erstellt und insbesondere in der Speichereinrichtung 22 abgelegt wird. Mit anderen Worten ist vorgesehen, dass ein erster Parkraum 1 erfasst und ein entsprechender, diesen ersten Parkraum 1 räumlich charakterisierender, Datensatz 14 erstellt und in der Speichereinrichtung 22 abgespeichert wird. Wird mittels des Kraftwagens 2 dieser erste Parkraum 1 verlassen und ein weiterer Parkraum 1 angefahren, bzw. der Kraftwagen 2 in dem weiteren Parkraum 1 geparkt, wird dieser weitere Parkraum 1 dann mittels des Parkassistenzsystems 3 erfasst und ein dem weiteren Parkraum 1 zugeordneter, den weiteren Parkraum 1 räumlich charakterisierender Datensatz 14 erstellt und ebenfalls in der Speichereinrichtung 22 abgespeichert. Im Zusammenspiel mit den Positionsdaten 24 und/oder Zusatzdaten 27 kann dann festgestellt werden, an welchem der Parkräume 1 der Kraftwagen 2 abgestellt werden soll, die insbesondere ein jeweiliges, voneinander unterschiedliches Volumen aufweisen. So kann bereits bei der Anfahrt an den jeweiligen Parkraum 1 entschieden werden, wie lange der Zeitraum ist, während dessen die Verbrennungskraftmaschine 5 in dem gefeuerten Betriebszustand betrieben werden kann, bis die Verbrennungsabgaskonzentration in dem jeweiligen Volumen gesundheitsschädlich für den Nutzer des Kraftwagens 2 wird.

Es ist des Weiteren eine Zeitmesseinrichtung 30 vorgesehen, welche misst, wie lange die Verbrennungskraftmaschine 5 in dem befeuerten Betriebszustand betrieben wird. Des Weiteren ist die Zeitmesseinrichtung 30 dazu ausgebildet zu messen, wie lange die Verbrennungskraftmaschine 5 in dem ausgeschalteten Betriebszustand betrieben wird. Insbesondere misst die Zeitmesseinrichtung 30, wie lange die Verbrennungskraftmaschine 5 im befeuerten Betriebszustand betrieben wird, wenn der Kraftwagen 2 bereits vollständig in den Parkraum 1 eingefahren ist. Basierend auf der jeweils gemessenen Zeitdauer erzeugt die Zeitmesseinrichtung 30 entsprechende Betriebsdauerdaten 31, die der Steuereinrichtung 12 bereitgestellt werden, sodass die Steuereinrichtung 12 die Betriebsdauerdaten 31 dem Datensatz 14 zum Steuern der Antriebseinheit 4 bzw. der Verbrennungskraftmaschine 5 hinzufügt.

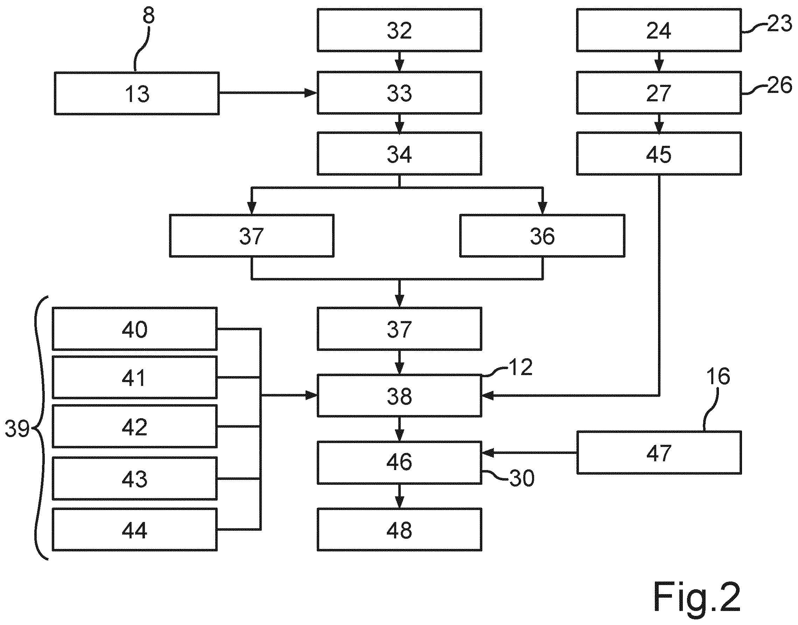

Fig. 2 zeigt zur Verdeutlichung des Verfahrens zum Steuern der Antriebseinheit 4 des Kraftwagens 2 ein Verfahrensschema in Form eines Flussdiagramms, wobei bei dem Verfahren die Elemente 11, 20 aus einem vorangegangenen Einparkvorgang nicht berücksichtigt werden. In einem Schritt 32 wird das Parkassistenzsystem 3 gestartet, wodurch der Kraftwagen 2 in einen Parkbetrieb umgeschaltet wird. Hierbei wird mittels des Parkassistenzsystems 3, insbesondere mittels der Steuereinrichtung 12, die Antriebseinheit 4, insbesondere die Verbrennungskraftmaschine 5, gestartet. Ist also die Verbrennungskraftmaschine 5 in dem ausgeschalteten Betriebszustand, wird die Verbrennungskraftmaschine 5 mittels der Steuereinrichtung 12 in den befeuerten Betriebszustand geschaltet. Das Anlassen der Verbrennungskraftmaschine 5 entfällt, wenn beim Start des Parkassistenzsystems 3 die Verbrennungskraftmaschine 5 sich bereits im befeuerten Betriebszustand befindet.

In einem Schritt 33 des Verfahrens erfolgt das zumindest teilweise Erfassen des Parkraums 1, das heißt, es werden die Elemente 11, 20 in einer Fahrzeugumgebung des Kraftwagens 2 detektiert. Hierzu wird die Sensorik 8 des Kraftwagens 2 eingesetzt.

In einem Schritt 34 erfolgt eine Höhenklassifikation der Elemente 11, 20, die sich in der Fahrzeugumgebung befinden.

Des Weiteren werden in einem Schritt 35 horizontale Abstände zu den nächstgelegenen, hohen Elementen 11, 20 in der Fahrzeugumgebung des Kraftwagens 2 ermittelt.

In einem weiteren Schritt 36, der insbesondere gleichzeitig mit dem Schritt 35 ablaufen kann, werden vertikale Abstände zu den Elementen 11, 20 ermittelt, die über dem Kraftwagen 2 angeordnet, beispielsweise an dem als Deckenelement 18 ausgebildeten Strukturelement 11 befestigt, beispielsweise aufgehängt sind.

Ergebnisse aus den Schritten 35 und 36, das heißt entsprechende Sensordaten 13, fließen dann in einen Schritt 37 ein.

In dem Schritt 37 des Verfahrens wird das Volumen des Parkraums 1 ermittelt, in welchem der Kraftwagen 2 abgestellt ist bzw. geparkt werden soll oder bereits geparkt ist. Hierzu wird von einem Worst-Case-Szenario ausgegangen, das heißt, es wird ein Volumen des Parkraums 1 angenommen, das schlechtestenfalls vorhanden ist. Sind beispielsweise Elemente 20 in dem Parkraum 1 über einen Abstand von einem Strukturelement 11, das beispielsweise als ein Wandelement ausgebildet sein kann, entfernt, wird zur Berechnung des Volumens des entsprechenden Elements 20 der Abstand zwischen dem Strukturelement 11 bzw. Wandelement und einer dem Strukturelement 11 zugewandten Seite des Elements 20 hinzuaddiert, da mittels der Sensorik 8 bzw. mittels der Sensoren 9 nicht zweifelsfrei feststellbar ist, ob und/oder wie weit das jeweilige Element 20 von dem entsprechenden Strukturelement 11 entfernt auf der Bodenfläche 10 des Parkraums 1 abgestellt ist.

In einem Schritt 38 wird - insbesondere mittels der Steuereinrichtung 12 - der maximal zulässige Zeitraum ermittelt, während dessen die Verbrennungskraftmaschine 5 im befeuerten Betriebszustand betrieben werden kann, ohne dass eine Verbrennungsabgaskonzentration in dem Volumen des Parkraums 1 zu hoch wird. Hierzu können insbesondere weitere Kraftwagendaten 39, beispielsweise ein Motortyp 40, ein aktueller Verbrauch 41, eine Kraftstoffart 42, eine Temperatur 43 des Motors und/oder eines Abgassystems, eine Außentemperatur 44 etc. eingehen.

Weiter kann in einen Schritt 38, das heißt in das Ermitteln des zulässigen Zeitraums für den befeuerten Betriebszustand der Verbrennungskraftmaschine 5, eine Umgebungsart 45 der Umgebung des Kraftwagens 2 eingehen. Um die Umgebungsart 45 zu bestimmen bzw. zu ermitteln, werden die Positionsdaten 24 herangezogen, die dann beispielsweise direkt in den Schritt 38, insbesondere in Datenform, einfließen. Es kann darüber hinaus vorgesehen sein, dass die Positionsdaten 24, die mittels des Navigationssystems 23 des Kraftwagens 2 bestimmt werden, an das Backend, das heißt an die Cloudservereinrichtung 26, übermittelt werden. Insbesondere dort können zur Bestimmung der Umgebungsart 45 demnach sowohl die Positionsdaten 24 als auch die Zusatzdaten 27 herangezogen werden.

Ist also der maximal zulässige Zeitraum, während dessen die Verbrennungskraftmaschine 5 in dem befeuerten Betriebszustand betrieben werden kann, im Schritt 38 bestimmt worden, wird dieses Ergebnis einem Schritt 46 bereitgestellt. Im Schritt 46 wird, beispielsweise mittels der Zeitmesseinrichtung 30, die Zeitdauer bestimmt, während derer die Verbrennungskraftmaschine 5 bereits im befeuerten Betriebszustand betrieben worden ist. Beispielsweise mittels des Endgeräts 16 kann der Nutzer des Kraftwagens 2 durch eine Bedienhandlung 47, beispielsweise um den Parkbetrieb des Kraftwagens 2 fortzusetzen, das Erfassen der Zeitdauer des befeuerten Betriebs wenigstens einmal zurücksetzen bzw. neustarten.

Unterbleibt die Bedienhandlung 47 und läuft der maximal zulässige Zeitraum zum befeuerten Betrieb der Verbrennungskraftmaschine 5 ab, wird in einem Schritt 48 mittels der Steuereinrichtung 12 die Verbrennungskraftmaschine 5 derart angesteuert, dass die Verbrennungskraftmaschine 5 aus dem befeuerten Betrieb in den ausgeschalteten Betrieb geschaltet wird. Im Schritt 48 kann des Weiteren vorgesehen sein, dass die Fahrgastzelle des Kraftwagens 2 und/oder ein Fahrbetrieb des Kraftwagens 2 nach dem Umschalten der Verbrennungskraftmaschine 5 in den ausgeschalteten Betriebszustand versperrt werden/wird.

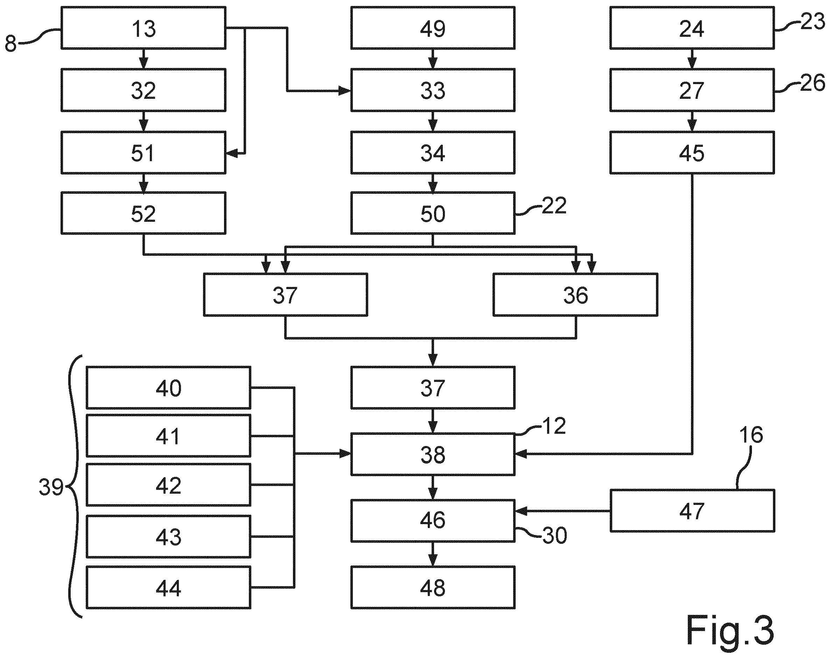

Fig. 3 zeigt zur Verdeutlichung einer weiteren Ausgestaltung des Verfahrens zum Steuern der Antriebseinheit 4 des Kraftwagens 2 ein Verfahrensschema in Form eines Flussdiagramms, wobei die Elemente 11, 20 aus dem vorangegangenen Einparkvorgang berücksichtigt werden. Im Folgenden werden hauptsächlich die Unterschiede dargelegt, in welchen sich das Verfahren gemäß dem Verfahrensschema in Fig. 3 von dem Verfahren gemäß dem Verfahrensschema in Fig. 2 unterscheidet.

Bei einem vorherigen Einparkvorgang 49 wurde demnach das Verfahren gemäß dem Verfahrensschema in Fig. 2 zumindest teilweise durchgeführt. Im Unterschied dazu erfolgt in einem Schritt 50, der sich an den Schritt 34, das heißt an die Höhenklassifikation der Elemente 11, 20, anschließt, ein persistentes Speichern der Umgebung der Parkposition. Das bedeutet, dass beispielsweise mittels der Speichereinrichtung 22 der den Parkraum 1 charakterisierende Datensatz 14 in dem Schritt 50 mittels der Speichereinrichtung 22 abgespeichert wird. Der Datensatz 14 fließt dann in die Schritte 35 und 36 zur weiteren Verarbeitung ein.

Im Schritt 32 wird mittels des Parkassistenzsystems die Antriebseinheit 4, insbesondere die Verbrennungskraftmaschine 5, in den befeuerten Betriebszustand geschaltet, wenn die Verbrennungskraftmaschine 5 sich noch nicht in dem befeuerten Betriebszustand befindet. Hiernach erfolgt in einem Schritt 51 eine erneute Detektion der Elemente 11, 20 in der Umgebung des Kraftwagens 2, wobei der Schritt 51 analog zu dem Schritt 33 ausgebildet ist. Dies geschieht also bei dem aktuellen Einparkvorgang, wohingegen der Schritt 34 bei dem vorhergehenden bzw. vorangegangenen Einparkvorgang 49 erfolgt ist.

Nach dem Schritt 51 erfolgt bei dem aktuellen Einparkvorgang - analog zu dem Schritt 34 des vorangegangenen Einparkvorgangs 49 - eine erneute bzw. wiederholte Höhenklassifikation der Elemente 11, 20 in der Umgebung des Kraftwagens 2. Entsprechende Höhendaten, die als Ergebnis aus dem Schritt 52 resultieren, werden bei dem aktuellen Einparkvorgang dann sowohl zur Ermittlung der horizontalen Abstände zu den nächstliegenden, hohen Elementen 11, 20 in der Umgebung der Fahrzeugumgebung (das heißt dem Schritt 35) als auch der Ermittlung der vertikalen Abstände zu den Elementen 11, 20 über dem Kraftwagen 2 (das heißt dem Schritt 36) bereitgestellt.

Die übrigen zu dem Verfahrensschema gemäß Fig. 3 gehörenden Schritte entsprechen zumindest im Wesentlichen den im Zusammenhang mit dem Verfahrensschema gemäß Fig. 2 beschriebenen Schritten.

Insgesamt zeigt die Erfindung, wie der Parkbetrieb des Kraftwagens 2 besonders vorteilhaft, das heißt besonders sicher und besonders nutzerfreundlich, ausgebildet ist.

### Bezugszeichenliste

- 1: Parkraum
- 2: Kraftwagen
- 3: Parkassistenzsystem
- 4: Antriebseinheit
- 5: Verbrennungskraftmaschine
- 6: Erste Achse
- 7: Zweite Achse
- 8: Sensorik
- 9: Sensor
- 10: Bodenfläche
- 11: Strukturelement
- 12: Steuereinrichtung
- 13: Sensordaten
- 14: Datensatz
- 15: Höhe
- 16: Endgerät
- 17: Höhe
- 18: Deckenelement
- 19: Tiefe
- 20: Element
- 21: Elementhöhe
- 22: Speichereinrichtung
- 23: Navigationssystem
- 24: Positionsdaten
- 25: Gebäudestruktur
- 26: Cloudservereinrichtung
- 27: Zusatzdaten
- 28: Datentransferelement
- 29: Datentransferelement
- 30: Zeitmesseinrichtung
- 31: Betriebsdauerdaten
- 32: Schritt
- 33: Schritt
- 34: Schritt
- 35: Schritt
- 36: Schritt
- 37: Schritt
- 38: Schritt
- 39: Kraftwagendaten
- 40: Motortyp
- 41: aktueller Verbrauch
- 42: Kraftstoffart
- 43: Temperatur
- 44: Außentemperatur
- 45: Umgebungsart
- 46: Schritt
- 47: Bedienhandlung
- 48: Schritt
- 49: Einparkvorgang
- 50: Schritt
- 51: Schritt
- 52: Schritt

## Patentansprüche

1. Verfahren zum Steuern einer Antriebseinheit (4, 5) eines Kraftwagens (2), wobei die Antriebseinheit als eine Verbrennungskraftmaschine (5) ausgebildet ist oder eine solche umfasst und die Verbrennungskraftmaschine (5) in einem befeuerten Betriebszustand durch eine Abgasanlage hindurch Verbrennungsabgase ausstößt und in einem ausgeschalteten Betriebszustand der Verbrennungskraftmaschine (5) in keinem Brennraum der Verbrennungskraftmaschine ein Einström-, Verdichtungs-, Arbeits- und/oder Ausschiebevorgang von Fluid stattfindet, wobei eine Sensorik (8, 9) einen Parkraum (1) des Kraftwagens (2) zumindest teilweise erfasst und entsprechende Sensordaten (13) erzeugt, die einer Steuereinrichtung (12) bereitgestellt werden, mittels derer ein den Parkraum (1) zumindest teilweise räumlich charakterisierender Datensatz (14) erstellt wird, , **dadurch gekennzeichnet, dass**
mittels der Steuereinrichtung (12) ein Volumenmaß des Parkraums (1) ermittelt und dem Datensatz (14) zum Steuern der Antriebseinheit (4, 5) hinzugefügt wird,
wobei mit weiteren Kraftwagendaten (39) mittels der Steuereinrichtung (12) auf einen Abgasstrom und/oder eine Abgasqualität bzw. -zusammensetzung geschlossen wird, woraus sich unter Berücksichtigung des ermittelten Volumenmaßes des Parkraums (1) ein noch in zulässiger Weise verfügbarer Restzeitraum zum Fortsetzen eines Parkbetriebs mittels eines Nutzers ergibt, bevor eine Abgaskonzentration in dem Volumenmaß des Parkraums einen Schwellwert überschreitet,
sodass mittels der Steuereinrichtung (12) in Abhängigkeit von dem Datensatz (14) die Antriebseinheit (4, 5) gesteuert wird.

2. Verfahren nach Anspruch 1,
**dadurch gekennzeichnet, dass**
mittels der Steuereinrichtung (12) anhand der Sensordaten (24) wenigstens eine Höhe (17, 21) von in dem Parkraum (1) angeordneten Elementen (11, 20) zumindest grob bestimmt wird und ein entsprechendes Höhenmaß dem Datensatz (14) zum Steuern der Antriebseinheit (4, 5) hinzugefügt wird.

3. Verfahren nach Anspruch 1 oder 2,
**dadurch gekennzeichnet, dass**
der den Parkraum (1) zumindest teilweise räumlich charakterisierende Datensatz (14) in einer Speichereinrichtung (22) für wenigstens einen weiteren Steuervorgang, bei welchem die Steuereinrichtung (12) die Antriebseinheit (4, 5) steuert, zumindest vorübergehend gespeichert wird.

4. Verfahren nach Anspruch 3,
**dadurch gekennzeichnet, dass**
bei einem Einfahren des Kraftwagens (2) in den Parkraum (1) die Sensorik (8, 9) den Parkraum (1) zumindest teilweise erfasst und die erzeugten entsprechenden Sensordaten (13) zumindest bis zu einem weiteren Einfahren gespeichert werden.

5. Verfahren nach Anspruch 3 oder 4,
**dadurch gekennzeichnet, dass**
bei einem Ausfahren des Kraftwagens (2) aus dem Parkraum (1) die Sensorik (8, 9) den Parkraum (1) zumindest teilweise erfasst und die erzeugten entsprechenden Sensordaten (13) zumindest bis zu einem erneuten Ausfahren gespeichert werden.

6. Verfahren nach einem der vorhergehenden Ansprüche,
**dadurch gekennzeichnet, dass**
der Steuereinrichtung (12) mittels eines Navigationssystems (23) des Kraftwagens (2) Positionsdaten (24) bereitgestellt werden, die mittels der Steuereinrichtung (12) dem Datensatz (14) zum Steuern der Antriebseinheit (4, 5) hinzugefügt werden.

7. Verfahren nach einem der vorhergehenden Ansprüche,
**dadurch gekennzeichnet, dass**
der Steuereinrichtung (12) mittels einer Servereinrichtung (26) Zusatzdaten (27) bereitgestellt werden, die charakterisieren, ob der Parkraum im Freien ist oder nicht, wobei dann die Zusatzdaten mittels der Steuereinrichtung (12) dem Datensatz (14) zum Steuern der Antriebseinheit (4, 5) hinzugefügt werden.

8. Verfahren nach Anspruch 6 und 7,
**dadurch gekennzeichnet, dass**
anhand der Positionsdaten (24) festgestellt wird, ob der Kraftwagen (2) sich innerhalb einer Gebäudestruktur (25) befindet oder im Freien abgestellt oder geparkt ist.

9. Verfahren nach einem der Ansprüche 6 bis 8,
**dadurch gekennzeichnet, dass**
mittels der Positionsdaten (24) und/oder der Zusatzdaten (27) festgestellt wird,
- ob der Kraftwagen (2) sich auf einer Fahrt in Richtung hin zu einem Parkraum (1) befindet, der bereits charakterisiert und/oder erfasst ist, und/oder
- ob beabsichtigt ist, den Kraftwagen (2) in einem Parkraum (1) abzustellen, wobei der den entsprechenden Parkraum (1) charakterisierende Datensatz (14) bereits in der Speichereinrichtung (22) abgespeichert ist, wobei mittels des Parkassistenzsystems (3) eine Vielzahl von Parkräumen (1) erfasst wird und ein entsprechender, dem jeweiligen Parkraum (1) zugeordneter Datensatz (14) erstellt und insbesondere in der Speichereinrichtung (22) abgelegt wird, und/oder
- an welchem der Parkräume (1) der Kraftwagen (2) abgestellt werden soll, die insbesondere ein jeweiliges, voneinander unterschiedliches Volumen aufweisen, wobei insbesondere bereits bei einer Anfahrt an den jeweiligen Parkraum (1) entschieden wird, wie lange der Restzeitraum ist, während dessen die Verbrennungskraftmaschine (5) in dem gefeuerten Betriebszustand betrieben werden kann, bis die Abgaskonzentration in dem jeweiligen Volumen gesundheitsschädlich für den Nutzer des Kraftwagens (2) wird.

10. Verfahren nach einem der vorhergehenden Ansprüche,
**dadurch gekennzeichnet, dass**
der Restzeitraum, während dessen die Verbrennungskraftmaschine (5) in dem befeuerten Betriebszustand betrieben werden kann, bevor die Abgaskonzentration in dem Parkraum (1) zu hoch wird, von dem Volumenmaß des Parkraums (1) abhängt.

11. Verfahren nach einem der vorhergehenden Ansprüche,
**dadurch gekennzeichnet, dass**
der Steuereinrichtung (12) mittels einer Zeitmesseinrichtung (30) Betriebsdauerdaten (31) bereitgestellt werden, die eine einem jeweiligen Betriebszustand der Antriebseinheit (4, 5) zugeordnete Betriebsdauer der Antriebseinheit (4, 5) charakterisieren, und die Betriebsdauerdaten (31) mittels der Steuereinrichtung (12) dem Datensatz (14) zum Steuern der Antriebseinheit (4, 5) hinzugefügt werden.

12. Verfahren nach Anspruch 11,
**dadurch gekennzeichnet, dass**
die Zeitmesseinrichtung (30) eine erste Zeitdauer, während derer die Verbrennungskraftmaschine (5) im befeuerten Betriebszustand ist und/oder eine zweite Zeitdauer, während derer die Verbrennungskraftmaschine (5) im ausgeschalteten Betriebszustand ist, erfasst und die jeweiligen Zeitdauern in Form der Betriebsdauerdaten der Steuereinrichtung (12) bereitstellt, welche anhand des dann die Betriebsdauerdaten umfassenden Datensatzes die Verbrennungskraftmaschine (5) steuert.

13. Verfahren nach einem der vorhergehenden Ansprüche,
**dadurch gekennzeichnet, dass**
mittels der Steuereinrichtung (12) der maximal zulässige Restzeitraum ermittelt wird, wobei hierzu die weiteren Kraftwagendaten (39) und/oder eine Umgebungsart (45) der Umgebung des Kraftwagens (2) eingehen.

14. Parkassistenzsystem (3) für einen Kraftwagen (2) zum Steuern einer Antriebseinheit (4, 5) des Kraftwagens (2), wobei die Antriebseinheit als eine Verbrennungskraftmaschine (5) ausgebildet ist oder eine solche umfasst und die Verbrennungskraftmaschine (5) in einem befeuerten Betriebszustand durch eine Abgasanlage hindurch Verbrennungsabgase ausstößt und in einem ausgeschalteten Betriebszustand der Verbrennungskraftmaschine (5) in keinem Brennraum der Verbrennungskraftmaschine ein Einström-, Verdichtungs-, Arbeits- und/oder Ausschiebevorgang von Fluid stattfindet, mit einer Sensorik (8, 9), mittels derer ein Parkraum (1) des Kraftwagens (2) zumindest teilweise erfassbar und entsprechende Sensordaten (13) erzeugbar sind, mit einer Steuereinrichtung (12), der die entsprechenden Sensordaten (13) bereitstellbar sind, wobei mittels der Steuereinrichtung (12) ein den Parkraum (1) zumindest teilweise räumlich charakterisierender Datensatz (14) erstellbar ist, sodass mittels der Steuereinrichtung (12) in Abhängigkeit von dem Datensatz (14) die Antriebseinheit (4, 5) steuerbar ist,
**dadurch gekennzeichnet, dass**
mittels der Steuereinrichtung (12) anhand der Sensordaten (13) ein Volumenmaß des Parkraums (1) ermittelbar und dem Datensatz (14) zum Steuern der Antriebseinheit (4, 5) hinzufügbar ist, mit weiteren Kraftwagendaten (39) mittels der Steuereinrichtung (12) auf einen Abgasstrom und/oder eine Abgasqualität bzw. -zusammensetzung schließbar ist, woraus sich unter Berücksichtigung des ermittelten Volumenmaßes des Parkraums (1) ein noch in zulässiger Weise verfügbarer Restzeitraum zum Fortsetzen eines Parkbetriebs mittels eines Nutzers ergibt, bevor eine Abgaskonzentration in dem Volumenmaß des Parkraums einen Schwellwert überschreitet, sodass mittels der Steuereinrichtung (12) in Abhängigkeit von dem Datensatz (14) die Antriebseinheit (4, 5) steuerbar ist.

15. Kraftwagen (2) mit einem nach Anspruch 14 ausgebildeten Parkassistenzsystem (3).

## Claims

1. Method for controlling a drive unit (4, 5) of a motor vehicle (2), the drive unit being designed as or comprising an internal combustion engine (5) and the internal combustion engine (5) expelling combustion exhaust gases through an exhaust system in an actual operating state and, in a switched-off operating state of the internal combustion engine (5), no inflow, compression, working and/or expulsion process of fluid taking place in any combustion chamber of the internal combustion engine, a sensor system (8, 9) at least partially detecting a parking space (1) of the motor vehicle (2) and generating corresponding sensor data (13) which are provided to a control device (12), by means of which a data set (14) which at least partially spatially characterizes the parking space (1) is created,
**characterized in that**
a volume measurement of the parking space (1) is determined and added to the data set (14) by means of the control device (12) in order to control the drive unit (4, 5),
an exhaust gas flow and/or an exhaust gas quality or composition being deduced from further motor vehicle data (39) by means of the control device (12), which, taking into account the determined volume measurement of the parking space (1), results in a remaining period of time still permissible for a user to continue a parking operation before an exhaust gas concentration in the volume measurement of the parking space exceeds a threshold value,
so that the drive unit (4, 5) is controlled by means of the control device (12) depending on the data set (14).

2. Method according to claim 1,
**characterized in that**
by means of the control device (12) on the basis of the sensor data (24) at least one height (17, 21) of elements (11, 20) arranged in the parking space (1) is at least roughly determined and a corresponding height measurement is added to the data set (14) in order to control the drive unit (4, 5).

3. Method according to claim 1 or 2,
**characterized in that**
the data set (14) which at least partially spatially characterizes the parking space (1) is at least temporarily stored in a storage device (22) for at least one further control process in which the control device (12) controls the drive unit (4, 5).

4. Method according to claim 3,
**characterized in that**
when the motor vehicle (2) enters the parking space (1), the sensor system (8, 9) at least partially detects the parking space (1) and the corresponding sensor data (13) generated are stored at least until the vehicle enters further.

5. Method according to claim 3 or 4,
**characterized in that**
when the motor vehicle (2) leaves the parking space (1), the sensor system (8, 9) at least partially detects the parking space (1) and the corresponding sensor data (13) generated are stored at least until the vehicle leaves again.

6. Method according to any of the preceding claims,
**characterized in that**
the control device (12) is provided with position data (24) by means of a navigation system (23) of the motor vehicle (2), which position data are added to the data set (14) by means of the control device (12) in order to control the drive unit (4, 5).

7. Method according to any of the preceding claims,
**characterized in that**
the control device (12) is provided, by means of a server device (26), with additional data (27) which characterize whether the parking space is outdoors or not, the additional data then being added to the data set (14) by means of the control device (12) in order to control the drive unit (4, 5).

8. Method according to claim 6 and 7,
**characterized in that**
on the basis of the position data (24) it is determined whether the motor vehicle (2) is located inside a building structure (25) or is stopped or parked outdoors.

9. Method according to any of claims 6 to 8,
**characterized in that**
it is determined by means of the position data (24) and/or the additional data (27)
- whether the motor vehicle (2) is traveling toward a parking space (1) that has already been characterized and/or detected, and/or
- whether it is intended to park the motor vehicle (2) in a parking space (1), the data set (14) that characterizes the corresponding parking space (1) already being stored in the storage device (22), a plurality of parking spaces (1) being detected by means of the parking assistance system (3) and a corresponding data set (14) associated with the relevant parking space (1) being created and stored in particular in the storage device (22), and/or
- at which of the parking spaces (1) the motor vehicle (2) is to be parked, which in particular have a relevant, mutually different volume, it being in particular already decided during the approach to the relevant parking space (1) how long the remaining period is during which the internal combustion engine (5) can be operated in the actual operating state until the exhaust gas concentration in the relevant volume becomes harmful to the health of the user of the motor vehicle (2).

10. Method according to any of the preceding claims,
**characterized in that**
the remaining period during which the internal combustion engine (5) can be operated in the actual operating state before the exhaust gas concentration in the parking space (1) becomes too high depends on the volume measurement of the parking space (1).

11. Method according to any of the preceding claims,
**characterized in that**
the control device (12) is provided, by means of a time measuring device (30), with operating time data (31) which characterize an operating time of the drive unit (4, 5) assigned to a particular operating state of the drive unit (4, 5), and the operating time data (31) are added to the data set (14) by means of the control device (12) in order to control the drive unit (4, 5).

12. Method according to claim 11,
**characterized in that**
the time measuring device (30) detects a first time period during which the internal combustion engine (5) is in the actual operating state and/or a second time period during which the internal combustion engine (5) is in the switched-off operating state, and provides the respective time periods in the form of the operating time data to the control device (12), which controls the internal combustion engine (5) on the basis of the data set then comprising the operating time data.

13. Method according to any of the preceding claims,
**characterized in that**
the maximum permissible remaining period is determined by means of the control device (12), the further motor vehicle data (39) and/or an environment type (45) of the environment of the motor vehicle (2) being taken into account for this purpose.

14. Parking assistance system (3) for a motor vehicle (2) for controlling a drive unit (4, 5) of the motor vehicle (2), the drive unit being designed as or comprising an internal combustion engine (5) and the internal combustion engine (5) expelling combustion exhaust gases through an exhaust system in an actual operating state and, in a switched-off operating state of the internal combustion engine (5), no inflow, compression, working and/or expulsion process of fluid taking place in any combustion chamber of the internal combustion engine, comprising a sensor system (8, 9) by means of which a parking space (1) of the motor vehicle (2) can be at least partially detected and corresponding sensor data (13) can be generated, comprising a control device (12) to which the corresponding sensor data (13) can be provided, a data set (14) that at least partially spatially characterizes the parking space (1) being able to be created by means of the control device (12), so that the drive unit (4, 5) can be controlled by means of the control device (12) depending on the data set (14),
**characterized in that**
a volume measurement of the parking space (1) can be determined by means of the control device (12) on the basis of the sensor data (13) and can be added to the data set (14) in order to control the drive unit (4, 5), an exhaust gas flow and/or an exhaust gas quality or composition can be deduced from further motor vehicle data (39) by means of the control device (12), which, taking into account the determined volume measurement of the parking space (1), results in a remaining period of time still permissible for a user to continue a parking operation before an exhaust gas concentration in the volume measurement of the parking space exceeds a threshold value, so that the drive unit (4, 5) can be controlled by means of the control device (12) depending on the data set (14).

15. Motor vehicle (2) comprising a parking assistance system (3) designed according to claim 14.

## Revendications

1. Procédé permettant la commande d'une unité d'entraînement (4, 5) d'un véhicule automobile (2), dans lequel l'unité d'entraînement est réalisée sous la forme d'un moteur à combustion interne (5) ou comprend un tel moteur, et le moteur à combustion interne (5) émet des gaz d'échappement de combustion à travers un système de gaz d'échappement dans un état de fonctionnement allumé et un processus d'admission, de compression, de travail et/ou d'expulsion de fluide n'ayant lieu dans aucune chambre de combustion du moteur à combustion interne dans un état de fonctionnement éteint du moteur à combustion interne (5), dans lequel un système de capteurs (8, 9) acquiert au moins partiellement un espace de stationnement (1) du véhicule automobile (2) et génère des données de capteur (13) correspondantes qui sont mises à la disposition d'un dispositif de commande (12) à l'aide duquel est établi un jeu de données (14) caractérisant spatialement au moins partiellement l'espace de stationnement (1),
**caractérisé en ce**
**qu'**une mesure de volume de l'espace de stationnement (1) est déterminée à l'aide du dispositif de commande (12) et est ajoutée au jeu de données (14) pour la commande de l'unité d'entraînement (4, 5),
dans lequel, avec d'autres données de véhicule automobile (39), il est possible de déduire à l'aide du dispositif de commande (12) un flux de gaz d'échappement et/ou une qualité ou une composition de gaz d'échappement, d'où il résulte, en tenant compte de la mesure de volume déterminée de l'espace de stationnement (1), un temps résiduel encore disponible de manière admissible pour la poursuite d'un fonctionnement de stationnement à l'aide d'un utilisateur avant qu'une concentration de gaz d'échappement dans la mesure de volume de l'espace de stationnement ne dépasse une valeur seuil,
de sorte que l'unité d'entraînement (4, 5) est commandée à l'aide du dispositif de commande (12) en fonction du jeu de données (14).

2. Procédé selon la revendication 1,
**caractérisé en ce**
**qu'**à l'aide du dispositif de commande (12), au moins une hauteur (17, 21) d'éléments (11, 20) disposés dans l'espace de stationnement (1) est déterminée au moins grossièrement à l'aide des données de capteur (24) et une mesure de hauteur correspondante est ajoutée au jeu de données (14) pour la commande de l'unité d'entraînement (4, 5).

3. Procédé selon la revendication 1 ou 2,
**caractérisé en ce que**
le jeu de données (14) caractérisant au moins partiellement l'espace de stationnement (1) spatialement est mémorisé au moins temporairement dans un dispositif de mémoire (22) pour au moins une autre opération de commande, dans laquelle le dispositif de commande (12) commande l'unité d'entraînement (4, 5).

4. Procédé selon la revendication 3,
**caractérisé en ce que**
lors d'une entrée du véhicule automobile (2) dans l'espace de stationnement (1), le système de capteurs (8, 9) acquiert au moins partiellement l'espace de stationnement (1) et les données de capteur (13) correspondantes générées sont mémorisées au moins jusqu'à une autre entrée.

5. Procédé selon la revendication 3 ou 4,
**caractérisé en ce que**
lors d'une sortie du véhicule automobile (2) de l'espace de stationnement (1), le système de capteurs (8, 9) acquiert au moins partiellement l'espace de stationnement (1) et les données de capteur (13) correspondantes générées sont mémorisées au moins jusqu'à une nouvelle sortie.

6. Procédé selon l'une des revendications précédentes,
**caractérisé en ce que**
des données de position (24) sont mises à disposition du dispositif de commande (12) à l'aide d'un système de navigation (23) du véhicule automobile (2), lesquelles sont ajoutées à l'aide du dispositif de commande (12) au jeu de données (14) pour la commande de l'unité d'entraînement (4, 5).

7. Procédé selon l'une des revendications précédentes,
**caractérisé en ce que**
des données supplémentaires (27) sont mises à disposition du dispositif de commande (12) à l'aide d'un dispositif serveur (26), lesquelles caractérisent si l'espace de stationnement est à l'extérieur ou non, dans lequel les données supplémentaires sont alors ajoutées à l'aide du dispositif de commande (12) au jeu de données (14) pour la commande de l'unité d'entraînement (4, 5).

8. Procédé selon la revendication 6 et 7,
**caractérisé en ce**
**qu'**au moyen des données de position (24), il est établi si le véhicule automobile (2) se trouve à l'intérieur d'une structure de bâtiment (25) ou s'il est stationné ou garé à l'extérieur.

9. Procédé selon l'une des revendications 6 à 8,
**caractérisé en ce**
**qu'**à l'aide des données de position (24) et/ou des données supplémentaires (27) il est établi,
- si le véhicule automobile (2) se trouve sur un trajet en direction d'un espace de stationnement (1) qui est déjà caractérisé et/ou acquis, et/ou
- si l'on a l'intention de garer le véhicule automobile (2) dans un espace de stationnement (1), dans lequel le jeu de données (14) caractérisant l'espace de stationnement (1) correspondant est déjà mémorisé dans le dispositif de mémoire (22), dans lequel une pluralité d'espaces de stationnement (1) sont détectés à l'aide du système d'assistance au stationnement (3) et un jeu de données (14) correspondant, associé à l'espace de stationnement (1) respectif, est généré et en particulier enregistré dans le dispositif de mémoire (22), et/ou
- dans lequel des espaces de stationnement (1) le véhicule automobile (2) doit être garé, lesquels présentent en particulier un volume respectif différent l'un de l'autre, dans lequel une décision est prise en particulier déjà lors d'une approche de l'espace de stationnement (1) respectif quant au temps résiduel pendant lequel le moteur à combustion interne (5) peut être amené à fonctionner dans l'état de fonctionnement allumé jusqu'à ce que la concentration des gaz d'échappement dans le volume respectif devienne nocive pour la santé de l'utilisateur du véhicule automobile (2).

10. Procédé selon l'une des revendications précédentes,
**caractérisé en ce que**
le temps résiduel pendant lequel le moteur à combustion interne (5) peut fonctionner dans l'état de fonctionnement allumé avant que la concentration de gaz d'échappement dans l'espace de stationnement (1) ne devienne trop élevée dépend de la mesure de volume de l'espace de stationnement (1).

11. Procédé selon l'une des revendications précédentes,
**caractérisé en ce que**
des données de durée de fonctionnement (31) sont mises à disposition du dispositif de commande (12) à l'aide d'un dispositif de mesure du temps (30), lesquelles caractérisent une durée de fonctionnement de l'unité d'entraînement (4, 5) associée à un état de fonctionnement respectif de l'unité d'entraînement (4, 5), et les données de durée de fonctionnement (31) sont ajoutées à l'aide du dispositif de commande (12) au jeu de données (14) pour la commande de l'unité d'entraînement (4, 5).

12. Procédé selon la revendication 11,
**caractérisé en ce que**
le dispositif de mesure du temps (30) acquiert une première durée pendant laquelle le moteur à combustion interne (5) est dans l'état de fonctionnement allumé et/ou une seconde durée pendant laquelle le moteur à combustion interne (5) est dans l'état de fonctionnement éteint, et met à disposition les durées respectives, sous la forme des données de durée de fonctionnement, du dispositif de commande (12) qui commande le moteur à combustion interne (5) à l'aide du jeu de données comprenant alors les données de durée de fonctionnement.

13. Procédé selon l'une des revendications précédentes,
**caractérisé en ce que**
le temps résiduel maximal autorisé est déterminé à l'aide du dispositif de commande (12), dans lequel, à cet effet, les autres données (39) de véhicule automobile et/ou un type d'environnement (45) de l'environnement du véhicule automobile (2) entrent.

14. Système d'assistance au stationnement (3) pour un véhicule automobile (2) pour la commande d'une unité d'entraînement (4, 5) du véhicule automobile (2), dans lequel l'unité d'entraînement est réalisée sous la forme d'un moteur à combustion interne (5) ou comprend un tel moteur, et le moteur à combustion interne (5) émet des gaz d'échappement de combustion à travers un système d'échappement dans un état de fonctionnement allumé et un processus d'admission, de compression, de travail et/ou d'expulsion de fluide n'ayant lieu dans aucune chambre de combustion du moteur à combustion interne dans un état de fonctionnement éteint du moteur à combustion interne (5), comportant un système de capteurs (8, 9), à l'aide duquel un espace de stationnement (1) du véhicule automobile (2) peut être acquis au moins partiellement et des données de capteurs (13) correspondantes peuvent être générées, comportant un dispositif de commande (12), auquel les données de capteurs (13) correspondantes peuvent être mises à disposition, dans lequel un jeu de données (14) caractérisant spatialement au moins partiellement l'espace de stationnement (1) peut être généré à l'aide du dispositif de commande (12), de sorte que l'unité d'entraînement (4, 5) peut être commandée à l'aide du dispositif de commande (12) en fonction du jeu de données (14),
**caractérisé en ce**
**qu'**une mesure de volume de l'espace de stationnement (1) peut être déterminée à l'aide du dispositif de commande (12) à l'aide des données de capteur (13) et peut être ajoutée au jeu de données (14) pour la commande de l'unité d'entraînement (4, 5), avec d'autres données de véhicule automobile (39), le dispositif de commande (12) peut déduire un flux de gaz d'échappement et/ou une qualité ou une composition de gaz d'échappement, d'où il résulte, compte tenu du volume de l'espace de stationnement (1) déterminé, un temps résiduel encore disponible de manière admissible pour la poursuite d'un fonctionnement de stationnement à l'aide d'un utilisateur avant qu'une concentration de gaz d'échappement dans la mesure de volume de l'espace de stationnement ne dépasse une valeur seuil, de sorte que l'unité d'entraînement (4, 5) peut être commandée à l'aide du dispositif de commande (12) en fonction du jeu de données (14).

15. Véhicule automobile (2) comportant un système d'assistance au stationnement (3) réalisé selon la revendication 14.
